# EUROPEAN PATENT APPLICATION

(11) **EP 4 848 856 A1**
(43) Date of publication of application: **02.12.2026**
(21) Application number: 24919283.2
(22) Date of filing: 24.01.2024
(51) Int. Cl.: H04W 72/0453

(54) **WIRELESS COMMUNICATION METHOD AND APPARATUS, DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: LIANG, Bin, Dongguan, Guangdong 523860 (CN); XU, Jing, Dongguan, Guangdong 523860 (CN); WU, Danyang, Dongguan, Guangdong 523860 (CN)
(74) Representative: RGTH
(86) International application number: PCT/CN2024/073900
(87) International publication number: WO 2025/156168

(57) **Abstract**

A wireless communication method and apparatus, a device and a storage medium, relating to the technical field of communications. The method comprises: receiving first information, wherein the first information is used for determining a first resource, the first resource is used for transmitting a sensing signal, and the first resource is not used for transmitting a communication signal. According to the method, during wireless communication, by determining a first resource and ensuring that the first resource is not used for transmitting a communication signal, when the communication signal and other signals coexist, the communication signal and other signals are transmitted without using the same resource, so that the communication interference between the communication signal and other signals can be effectively reduced, thereby improving the communication efficiency. In addition, when the first resource is used for transmitting a sensing signal, the method can effectively reduce the communication interference between the communication signal and the sensing signal, thereby improving the communication efficiency.

## Description

### TECHNICAL FIELD

Embodiments of the present application relate to the field of communication technologies, and more particularly, to a wireless communication method, a wireless communication apparatus, a device, and a storage medium.

### BACKGROUND

Wireless communication refers to a communication mode for performing data transmission via radio waves or other wireless transmission media.

During a wireless communication procedure, multiple different signals may be transmitted simultaneously. For example, in an intelligent transportation scenario, in addition to conventional communication signals, it is further necessary to transmit sensing signals to collect ambient information.

In the above method, when multiple signals (for example, comprising a sensing signal and a communication signal) are transmitted simultaneously, a problem of communication interference will be caused, thereby reducing communication efficiency.

### SUMMARY

Embodiments of the present application provide a wireless communication method, a wireless communication apparatus, a device, and a storage medium. The technical solutions provided by the embodiments of the present application are as follows.

According to an aspect of the embodiments of the present application, a wireless communication method is provided. The method is performed by a terminal device, and the method includes:
receiving first information, where the first information is used to determine a first resource, the first resource is used to transmit a sensing signal, and the first resource is not used to transmit a communication signal.

According to an aspect of the embodiments of the present application, a wireless communication method is provided. The method is performed by a network device, and the method includes:
transmitting first information, where the first information is used to determine a first resource, the first resource is used to transmit a sensing signal, and the first resource is not used to transmit a communication signal.

According to an aspect of the embodiments of the present application, a wireless communication apparatus is provided. The apparatus includes:
a receiving module, configured to receive first information, where the first information is used to determine a first resource, the first resource is used to transmit a sensing signal, and the first resource is not used to transmit a communication signal.

According to an aspect of the embodiments of the present application, a wireless communication apparatus is provided. The apparatus includes:
a transmitting module, configured to transmit first information, where the first information is used to determine a first resource, the first resource is used to transmit a sensing signal, and the first resource is not used to transmit a communication signal.

According to an aspect of the embodiments of the present application, a communication device is provided. The communication device includes a processor and a memory, where the memory stores a computer program thereon, and the processor executes the computer program to implement the above wireless communication methods. The communication device is a terminal device, or the communication device is a network device.

According to an aspect of the embodiments of the present application, a computer-readable storage medium is provided. The storage medium stores a computer program thereon, and the computer program is configured to be executed by a processor to implement the above wireless communication methods.

According to an aspect of the embodiments of the present application, a chip is provided. The chip includes a programmable logic circuitry and/or program instructions. The chip, when in operation, is configured to implement the above wireless communication methods.

According to an aspect of the embodiments of the present application, a computer program product is provided. The computer program product includes computer instructions, where the computer instructions are stored in a computer-readable storage medium, and a processor reads the computer instructions from the computer-readable storage medium and executes the computer instructions, to implement the above wireless communication methods.

The technical solutions provided by the embodiments of the present application may include the following beneficial effects.

During a wireless communication procedure, the first resource is determined and the first resource is not used to transmit a communication signal, so that when the communication signal and other signals coexist, the communication signal and other signals are transmitted without using the same resource. This may effectively reduce communication interference between the communication signal and other signals, thereby improving communication efficiency. In addition, in a case where the first resource is used to transmit a sensing signal, the above method may effectively reduce communication interference between the communication signal and the sensing signal, thereby improving communication efficiency.

### BRIEF DESCRIPTION OF THE DRAWINGS

FIG. 1 is a schematic diagram of a network architecture provided by an embodiment of the present application.
FIG. 2 is a schematic diagram of 8 sensing modes provided by an embodiment of the present application.
FIG. 3 is a schematic diagram of a sensing system including multiple sensing nodes provided by an embodiment of the present application.
FIG. 4 is a flowchart of a wireless communication method provided by an embodiment of the present application.
FIG. 5 is a schematic diagram of frequency-domain resources including first indication information provided by an embodiment of the present application.
FIG. 6 is a schematic diagram of frequency-domain resources including second indication information provided by an embodiment of the present application.
FIG. 7 is a schematic diagram of frequency-domain resources for first indication information and second indication information provided by an embodiment of the present application.
FIG. 8 is a schematic diagram including third indication information provided by an embodiment of the present application.
FIG. 9 is a schematic diagram of a first resource including a frequency-domain position and a time-domain position provided by an embodiment of the present application.
FIG. 10 is a schematic diagram of a wireless communication apparatus provided by an embodiment of the present application.
FIG. 11 is a schematic diagram of a wireless communication apparatus provided by another embodiment of the present application.
FIG. 12 is a schematic structural diagram of a terminal device provided by an embodiment of the present application.
FIG. 13 is a schematic structural diagram of a network device provided by an embodiment of the present application.

### DETAILED DESCRIPTION

To make objectives, technical solutions, and advantages of the present application clearer, the embodiments of the present application will be further described in detail below with reference to the accompanying drawings.

The network architecture and service scenarios described in the embodiments of the present application are intended to illustrate the technical solutions in the embodiments of the present application more clearly, and do not constitute a limitation on the technical solutions provided by the embodiments of the present application. Those of ordinary skill in the art would understand that as network architectures evolve and new service scenarios emerge, the technical solutions provided by the embodiments of the present application are equally applicable to similar technical problems.

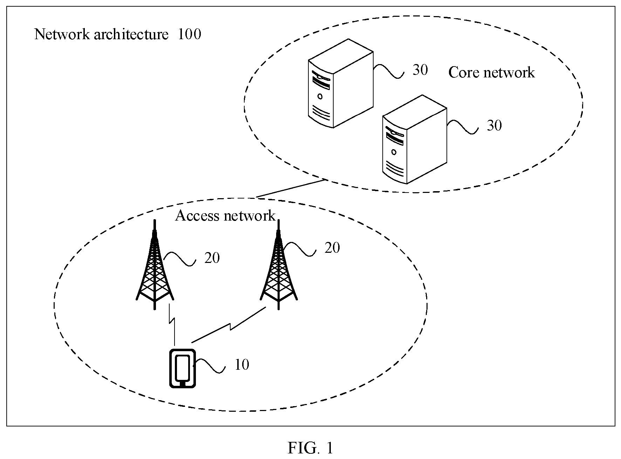

Please refer to FIG. 1, which illustrates a schematic diagram of a network architecture 100 provided by an embodiment of the present application. The network architecture 100 may include: a terminal device 10, an access network device 20, and a core network element 30.

The terminal device 10 may be referred to as user equipment (UE), an access terminal, a user unit, a user station, a mobile station, a mobile site, a remote station, a remote terminal, a mobile device, a wireless communication device, a user agent, or a user apparatus. In some embodiments, the terminal device 10 may further be a cellular phone, a cordless phone, a session initiation protocol (SIP) phone, a wireless local loop (WLL) station, a personal digital assistant (PDA), a handheld device with wireless communication functions, a computing device, or other processing devices connected to a wireless modem, an in-vehicle device, a wearable device, a terminal device in a 5th generation system (5GS), or a terminal device in a future evolved public land mobile network (PLMN), which is not limited in the embodiments of the present application. For convenience of description, the above devices are collectively referred to as the terminal device. There are typically multiple terminal devices 10, and one or more terminal devices 10 may be distributed in a cell managed by each access network device 20. The terminal device may also be abbreviated as a terminal or UE, the meaning of which is understood by those skilled in the art.

The access network device 20 is a device deployed in an access network to provide wireless communication functions for the terminal device 10. The access network device 20 may include various forms of macro base stations, micro base stations, relay stations, access points, or the like. In systems employing different radio access technologies, the names of devices with access network device functions may vary. For example, in a 5G NR system, it is referred to as a gNodeB or gNB. As communication technology evolves, the name "access network device" may be changed. For convenience of description, in the embodiments of the present application, the above apparatuses that provide wireless communication functions for the terminal device 10 are collectively referred to as the access network device. In some embodiments, a communication relationship may be established between the terminal device 10 and the core network element 30 via the access network device 20. Exemplarily, in a long term evolution (LTE) system, the access network device 20 may be an evolved universal terrestrial radio access network (EUTRAN) or one or more eNodeBs in the EUTRAN. In a 5G NR system, the access network device 20 may be a radio access network (RAN) or one or more gNBs in the RAN. In the embodiments of the present application, the "network device," unless otherwise specified, refers to the access network device 20, such as a base station.

The core network element 30 is a network element deployed in the core network. The primary functions of the core network element 30 re to provide user connectivity, manage users, and bear services, serving as a bearer network that provides an interface to external networks. For example, the core network element in a 5G NR system may include network elements such as an access and mobility management function (AMF) entity, a user plane function (UPF) entity, and a session management function (SMF) entity.

Integrated sensing and communication refers to merging the two functions of communication and sensing, enabling future communication systems to have both communication function and sensing function. While transmitting information over wireless channels, the system may actively perceive and analyze channel characteristics to sense the physical characteristics of the surrounding environment, thereby enhancing the communication function and the sensing function. For example, using base station signals to sense ambient information and design communication links, obstacles may be avoided, thereby improving communication performance.

Next-generation networks (such as B5G and 6G networks) are expected to be a convergence of mobile communication network, sensing network and computing network. A narrow sensing network is a system having capabilities such as target localization (ranging, velocity measurement, angle measurement), objective imaging, objective detection, objective tracking, and objective recognition. A broad sensing network is a system having the attributes and states of all services, networks, users, terminals, and ambient objects. From a perspective of sensing applications, sensing may be categorized classified as follows.

Outdoor, wide-area, or local-area applications: including smart city (e.g., weather monitoring), smart transportation/high-speed rail (e.g., high-precision map construction, road surveillance, intrusion detection), and a low-altitude application (e.g., drone monitoring and obstacle avoidance, flight intrusion detection, flight path management), or the like;

Indoor or local-area applications: including smart home and health management (e.g., respiratory monitoring, intrusion detection, gesture/posture recognition, motion monitoring, movement trajectory tracking), and smart factory (e.g., intrusion detection, material inspection, product defect detection), or the like.

The above are only examples providing some classifications of sensing applications. The application ranges of sensing are not limited to these examples.

Wireless communication and sensing are two major applications of modern radio frequency technology. For sensing, radio waves are used to detect parameters of the physical environment to implement ambient sensing, such as target localization, motion recognition, and imaging. Traditional sensing and wireless communication exist independently, and the separate design leads to a waste of wireless spectrum and hardware resources. In the era of B5G (Beyond 5G) and 6G, communication spectrum is moving towards millimeter wave, terahertz, and visible light communication, the future wireless communication spectrum will overlap with the traditional sensing spectrum. Integrated sensing and communication technology merges these two functions of wireless communication and sensing, which causes the sensing function to be implemented by using wireless resources of the wireless communication, sensing services over larger areas to be implemented by using widely deployed cellular networks, joint sensing to be performed via base stations and multiple terminals to implement higher sensing accuracy, and the sensing function to be implemented by reusing hardware modules of wireless communication to reduce costs. In summary, the integrated sensing and communication technology enables the future wireless communication system to have sensing capabilities, laying a foundation for the development of future services such as smart transportation, smart city, smart factory, and a drone.

The term "sensing" mentioned in the embodiments of the present application refers to a procedure of directly or indirectly obtaining sensing information about objective or environment based on at least one type of sensing signal, such as sound waves, electromagnetic waves, or light waves (including but not limited to lasers). For example, by sending and receiving sensing signals and performing measurement or other processing on the sensing signals, sensing information about the objective or environment is obtained, to support services such as localization, ranging, velocity measurement, angle measurement, target imaging, target detection, target tracking, and target recognition.

Additionally, the term "sensing" mentioned in the embodiments of the present application may be replaced by any other term that is capable of representing a meaning related to sensing, such as localization, ranging, velocity measurement, angle measurement, target imaging, target detection, target tracking, and target recognition.

The nodes participating in sensing are as follows.

Sensing transmitting node: a transmitting node of a sensing signal.

Sensing receiving node: the receiving node of a sensing signal.

Sensing node: the sensing transmitting node and the sensing receiving node are collectively referred to as sensing nodes, i.e., the nodes that perform sensing.

Sensing management node: a node that manages and controls sensing tasks. The sensing management node configures sensing tasks for sensing nodes, and after performing sensing, the sensing nodes feeds back sensing results to the sensing management node.

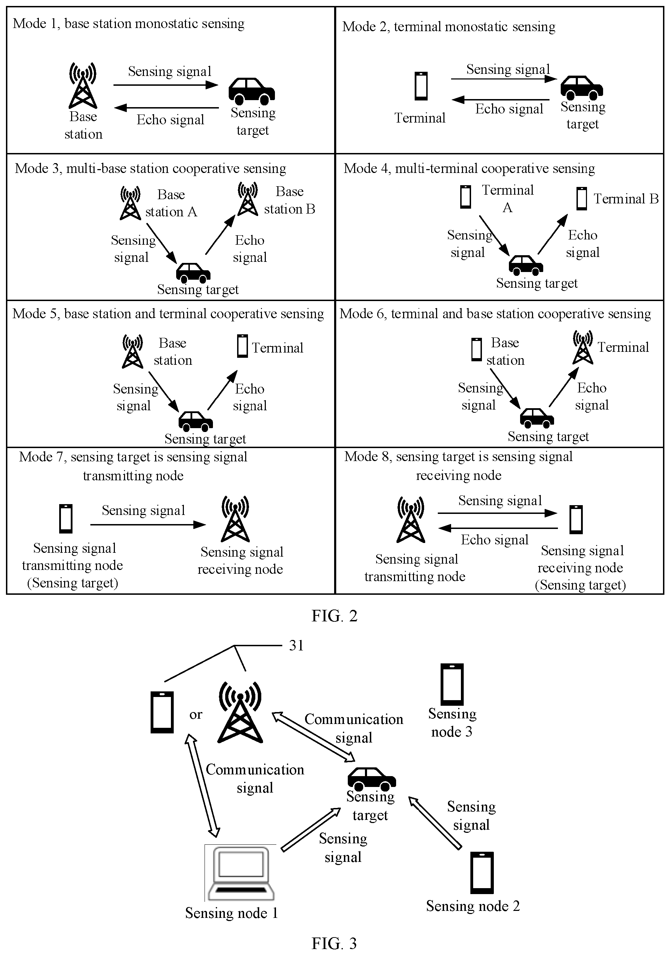

Sensing may be divided into 8 modes as illustrated in FIG. 2.

Mode 1, base station monostatic sensing: a base station transmits a sensing signal and receives an echo signal. In mode 1, the sensing transmitting node and the sensing receiving node are the same base station. That is, the base station transmits the sensing signal towards a sensing target, and after the sensing signal is reflected by the sensing target, the same base station receives the echo signal (i.e., the sensing signal reflected by the sensing target).

Mode 2, terminal monostatic sensing: a terminal transmits a sensing signal and receives an echo signal. In mode 2, the sensing transmitting node and the sensing receiving node are the same terminal. That is, the terminal transmits the sensing signal towards a sensing target, and after the sensing signal is reflected by the sensing target, the same terminal receives the echo signal.

Mode 3, multi-base station cooperative sensing: one base station (e.g., base station A in the figure) transmits a sensing signal, and another base station (e.g., base station B in the figure) receives an echo signal. In mode 3, the sensing transmitting node and the sensing receiving node are different base stations. That is, one base station transmits the sensing signal towards a sensing target, and after the sensing signal is reflected by the sensing target, another base station receives the echo signal.

Mode 4, multi-terminal cooperative sensing: one terminal (e.g., terminal A in the figure) transmits a sensing signal, and another terminal (e.g., terminal B in the figure) receives an echo signal. In mode 4, the sensing transmitting node and the sensing receiving node are different terminals. That is, one terminal transmits the sensing signal towards a sensing target, and after the sensing signal is reflected by the sensing target, another terminal receives the echo signal.

Mode 5, base station and terminal cooperative sensing: a base station transmits a sensing signal, and a terminal receives an echo signal. In mode 5, the sensing transmitting node is the base station, and the sensing receiving node is the terminal. That is, the base station transmits the sensing signal towards a sensing target, and after the sensing signal is reflected by the sensing target, the terminal receives the echo signal.

Mode 6, terminal and base station cooperative sensing: a terminal transmits a sensing signal, and a base station receives an echo signal. In mode 6, the sensing transmitting node is the terminal, and the sensing receiving node is the base station. That is, the terminal transmits the sensing signal towards a sensing target, and after the sensing signal is reflected by the sensing target, the base station receives the echo signal.

Mode 7, sensing target is sensing signal transmitting node. In mode 7, the sensing transmitting node is a terminal, and the sensing receiving node is a base station. Since the sensing target (the terminal) is the sensing transmitting node, after the sensing signal is transmitted from the sensing transmitting node (the terminal) to the sensing receiving node (the base station), no reflection is required, and the base station may directly parse a sensing result upon reception.

Mode 8, sensing target is sensing signal receiving node. In mode 8, the transmitting node is a base station, and the sensing receiving node is a terminal. Since the sensing target (the terminal) is the sensing receiving node, after receiving the sensing signal, the terminal needs to feed back a sensing result to the base station, to enable the base station obtains the sensing result.

It should be noted that, for convenience of reference, the echo signal in FIG. 2 is also referred to as the sensing signal in the embodiments of the present application.

The transmitting node and the receiving node of the sensing signal may be collectively referred to as a sensing node. In the above 8 sensing modes, there is only one sensing node or one pair of sensing nodes. However, in a wireless communication system, there are a large number of terminal devices (such as mobile phones, IoT devices). When there are multiple sensing nodes (i.e., base stations, mobile phones, IoT devices capable of transmitting sensing signals and/or receiving sensing signals) around the sensing target, the joint participation of multiple sensing nodes in sensing may improve sensing accuracy, meet the more complex sensing service requirements, and provide richer sensing services. As illustrated in FIG. 3, when there are multiple sensing nodes (such as sensing node 1, sensing node 2, and sensing node 3 in FIG. 3) in the system, there may be a sensing control node 31 to control and manage the entire sensing service to improve efficiency. The sensing control node 31 may be a base station, a terminal device, or a core network element.

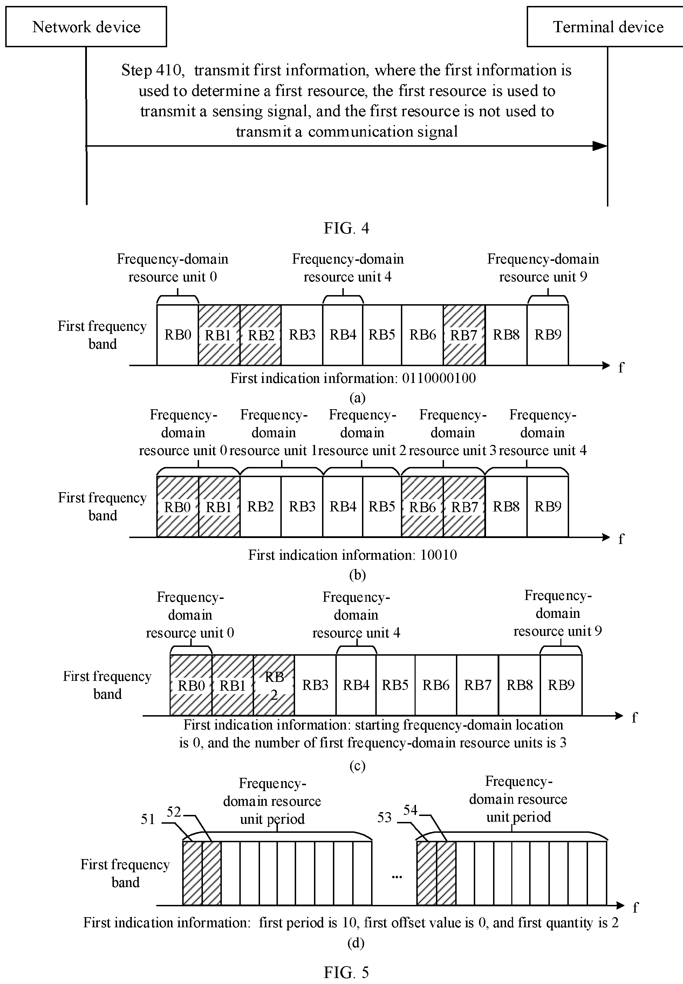

Please refer to FIG. 4, which illustrates a flowchart of a wireless communication method provided by an embodiment of the present application. The method includes the following step 410.

In step 410, a network device transmits first information, where the first information is used to determine a first resource, the first resource is used to transmit a sensing signal, and the first resource is not used to transmit a communication signal.

Correspondingly, a terminal device receives the first information.

The first resource refers to a time-frequency resource in the communication system that is not used to transmit the communication signal. The time-frequency resource is determined according to a time-domain resource position and a frequency-domain resource position. The time-domain resource position refers to a resource position allocated in time, and the frequency-domain resource position refers to the resource position allocated in frequency. The division granularity of the time-domain resource may be a frame, a subframe, a slot, a sub-slot, a symbol, a symbol group, or the like. The division granularity of the frequency-domain resource may be a resource block (RB), an RB group, a subcarrier, or the like.

In some embodiments, when unavailable resources are encountered during communication signal transmission, a rate matching procedure may be performed before resource mapping. The procedure is used to adjust the data amount (the number of bits) for the resource mapping. The resource mapping refers to a procedure of allocating communication signals to available time-frequency resources, and the data amount of the resource mapping refers to the number of bits included in the communication signal on which the resource mapping is performed. Exemplarily, during the communication signal transmission procedure, if an unavailable resource (e.g., the first resource) is encountered, it implies that fewer time-frequency resources are available for transmitting communication signals are limited, thereby reducing the number of bits of the communication signal on which the resource mapping is performed. If no unavailable resources are encountered, it implies that more time-frequency resources are available for transmitting communication signals, thereby increasing the number of bits of the communication signal on which resource mapping is performed. The rate matching procedure ensures that the transmitted data amount remains within the limits of the available time-frequency resources, while maximizing the utilization of the available time-frequency resources. By appropriately adjusting the data amount for the resource mapping, the transmission performance of communication signals may be improved, and reliability and efficiency of the transmission are ensured.

A communication signal is a signal used to transmit information. The communication signal may include data information, control information, reference signals used for channel measurement, and the like. It is used to transmit specific service data and control the communication procedure in a communication system. The data information may be embodied as a transport block (TB), a protocol data unit (PDU), or the like. The control information may be embodied as uplink control information (UCI), downlink control information (DCI), configuration information, grant information, or the like. The control information may also be referred to as signaling information. Generally, the control information has a smaller number of bits than data information. The reference signal may be embodied as a sounding reference signal (SRS), a channel state information reference signal (CSI-RS), or the like.

In some embodiments, the first resource is used to transmit signals other than the communication signal. In some embodiments, these other signals include the sensing signal, and the first resource is used to transmit the sensing signal. The sensing signal is a signal used to obtain ambient information, and refers to a signal used for monitoring, sensing, or measuring the ambient information. It is primarily used for sensing and measuring various types of information in the environment, such as target localization (ranging, velocity measurement, angle measurement), target imaging, target detection, target tracking, and target recognition. The sensing signal may be a sensing signal transmitted or received by a terminal device, may also be a sensing signal transmitted or received by a network device (to which the terminal device is accessed), or may also be a sensing signal transmitted or received by other network devices or other terminal devices.

In some embodiments, a first network device transmits first information to a first terminal device. Correspondingly, the first terminal device receives the first information and determines a first resource based on the first information. In the embodiments of the present application, there is no limitation on which device uses the first resource to transmit other signals (e.g., the sensing signal). For example, the first terminal device may use the first resource to transmit other signals (e.g., the sensing signal), or the first network device may use the first resource to transmit other signals (e.g., the sensing signal), or a terminal device other than the first terminal device may use the first resource to transmit other signals (e.g., the sensing signal), or a network device other than the first network device may use the first resource to transmit other signals (e.g., the sensing signal), which is not limited in the present application.

In some embodiments, taking a sensing signal as an example, after the first terminal device receives the first information transmitted by the first network device and determines the first resource based on the first information, the first terminal device obtains the first resource available for transmitting the sensing signal. When the first terminal device has a requirement for transmitting the sensing signal, the first resource may be used to transmit the sensing signal. For example, the first terminal device uses the first resource to transmit the sensing signal to the first network device or other devices.

In some embodiments, taking a sensing signal as an example, after the first terminal device receives the first information transmitted by the first network device and determines the first resource based on the first information, the first terminal device obtains the first resource available for transmitting the sensing signal. When the first network device, or a terminal device other than the first terminal device, or a network device other than the first network device has a requirement for transmitting the sensing signal, the first resource may be used to transmit the sensing signal. For example, the first resource may be used to transmit the sensing signal to the first terminal device or other devices. If the first terminal device is a receiving end of the sensing signal, the first terminal device may monitor the first resource which is used to transmit the sensing signal, to obtain the sensing signal transmitted by the first network device.

In some embodiments, the first information includes: frequency-domain information, where the frequency-domain information is used to determine a frequency-domain position of the first resource. The frequency-domain position refers to a position or frequency range occupied by the first resource in the frequency-domain.

In some embodiments, the frequency-domain information includes first indication information, the first indication information is used to determine a first frequency-domain resource unit in a first frequency band, and the first frequency-domain resource unit is a frequency-domain resource unit in which the first resource is located.

In some embodiments, the first frequency band is a carrier or bandwidth part (BWP) used to carry signals. The carrier is a basic unit used to transmit information in wireless communication, while the BWP refers to a specific piece of spectrum resources that may be used for signal transmission.

The first frequency band may include one or more frequency-domain resource units. Among the one or more frequency-domain resource units, a frequency-domain resource unit in which the first resource is located is referred to as a first frequency-domain resource unit. There may be at least one first frequency-domain resource unit among the one or more frequency-domain resource units, and the first indication information is used to indicate the at least one first frequency-domain resource unit.

The frequency-domain resource unit is a resource division granularity in the frequency-domain. The frequency-domain resource unit may be any of the following: one RB, multiple consecutive RBs (e.g., referred to as an RB group), one subcarrier, or multiple consecutive subcarriers (e.g., referred to as a subcarrier group), which is not limited in the present application.

In some embodiments, the first frequency band includes N frequency-domain resource units, and the first indication information includes N bits, each of the N bits is used to indicate whether a respective one of the N frequency-domain resource units is the first frequency-domain resource unit, and N is a positive integer.

The first frequency band includes the N frequency-domain resource units, and the first indication information includes N bits, each of the N bits is used to indicate whether a respective one of the N frequency-domain resource units is the first frequency-domain resource unit.

Exemplarily, N is equal to 10, representing that the first frequency band includes 10 frequency-domain resource units, and the first indication information includes 10 bits. Each of the 10 bits is used to indicate whether a respective one of the 10 frequency-domain resource units is the first frequency-domain resource unit.

Exemplarily, in a case where the frequency-domain resource unit is one RB, the first frequency band includes 10 RBs, and the first indication information includes 10 bits. Each bit is used to indicate whether one RB among the 10 RBs is a first RB, where the first RB refers to an RB in which the first resource is located.

Exemplarily, in a case where the frequency-domain resource unit is an RB group, the RB group refers to a set consisting of at least two consecutive RBs. The first frequency band includes 10 RB groups, and the first indication information includes 10 bits. Each bit is used to indicate whether one RB group among the 10 RB groups is a first RB group, where the first RB group is an RB group in which the first resource is located.

Exemplarily, in a case where the frequency-domain resource unit is one subcarrier, the first frequency band includes 10 subcarriers, and the first indication information includes 10 bits. Each bit is used to indicate whether one subcarrier among the 10 subcarriers is a first subcarrier, where the first subcarrier is a subcarrier in which the first resource is located.

Exemplarily, in a case where the frequency-domain resource unit is a subcarrier group, the subcarrier group refers to a set consisting of at least two consecutive subcarriers. The first frequency band includes 10 subcarrier groups, and the first indication information includes 10 bits. Each bit is used to indicate whether one subcarrier group among the 10 subcarrier groups is a first subcarrier group, where the first subcarrier group is a subcarrier group in which the first resource is located.

In the above method, in a case where the frequency-domain resource unit is an RB, the RB resources that cannot be used to transmit a communication signal may be obtained through the above method. In a case where the frequency-domain resource unit is a subcarrier, the subcarrier resources that cannot be used to transmit a communication signal may be obtained through the above method. On one hand, the first resource is not used to transmit the communication signal, which may ensure the quality and performance of communication transmission of the communication signal and other signals in the system. On the other hand, refining the indication of the frequency-domain position of unavailable resources to a subcarrier level, enables unavailable resources to be obtained more accurately. When an RB includes multiple subcarriers, the subcarriers included in the first resource are determined, and then other subcarriers not included in the first resource are used to transmit the communication signal, thereby improving the resource utilization of communication signal transmission. For example, in a case where an RB includes 10 subcarriers, where 5 subcarriers are included in the first resource, the remaining 5 subcarriers of the RB may still be used to transmit the communication signal, thereby improving the resource utilization of communication signal transmission.

In some embodiments, the first indication information includes N bits, and each bit of the N bits corresponds to two values: a first value and a second value, where the first value is different from the second value. Exemplarily, the first value may be 0, and the second value may be 1. When the value of the bit corresponding to a frequency-domain resource unit is 1, the frequency-domain resource unit is the first frequency-domain resource unit, and when the value of the bit corresponding to a frequency-domain resource unit is 0, the frequency-domain resource unit is not the first frequency-domain resource unit. Alternatively, when the value of the bit corresponding to a frequency-domain resource unit is 0, the frequency-domain resource unit is the first frequency-domain resource unit, and when the value of the bit corresponding to a frequency-domain resource unit is 1, the frequency-domain resource unit is not the first frequency-domain resource unit, which is not limited in the present application.

In some embodiments, if the frequency-domain resource unit is the RB, N is determined based on the number of RBs included in the first frequency band and the number of RBs included in each frequency-domain resource units, and each frequency-domain resource unit includes one RB or multiple consecutive RBs.

Exemplarily, when each frequency-domain resource unit is one RB, as illustrated in subgraph (a) of FIG. 5, the first frequency band includes 10 RBs, and each frequency-domain resource units include one RB, where RB0 is frequency-domain resource unit 0, RB1 is frequency-domain resource unit 1, ..., and RB9 is frequency-domain resource unit 9. Therefore, N is 10, which means that the first indication information includes 10 bits. For example, the first indication information is "0110000100" and a bit value of 1 represents that the frequency-domain resource unit is the first resource. Based on this, frequency-domain resource unit 1 (RB1), frequency-domain resource unit 2 (RB2), and frequency-domain resource unit 7 (RB7) are first frequency-domain resource units (areas filled with diagonal lines).

Exemplarily, when each frequency-domain resource unit is an RB group, i.e., multiple consecutive RBs, as illustrated in subgraph (b) of FIG. 5, the first frequency band includes 5 RB groups, and each RB group includes 2 RBs, where RB0 and RB1 are frequency-domain resource unit 0 (RB group 0), RB2 and RB3 are frequency-domain resource unit 1 (RB group 1), ..., and RB8 and RB9 are frequency-domain resource unit 4 (RB group 4). Therefore, N is 5, which means that the first indication information includes 5 bits. For example, the first indication information is "10010", and a bit value of 1 represents that the frequency-domain resource unit (RB group) is the first resource. Based on this, frequency-domain resource unit 0 (RB group 0, including RB0 and RB1) and frequency-domain resource unit 3 (RB group 3, including RB6 and RB7) are first frequency-domain resource units (areas filled with diagonal lines).

Exemplarily, if the frequency-domain resource unit is one subcarrier, it is assumed that the first frequency band includes 10 subcarriers and each frequency-domain resource unit includes one subcarrier, where subcarrier 0 is frequency-domain resource unit 0, subcarrier 1 is frequency-domain resource unit 1, ..., and subcarrier 9 is frequency-domain resource unit 9. Therefore, N is 10, which means that the first indication information includes 10 bits. For example, the first indication information is "0110000100", and a bit value of 1 represents that the frequency-domain resource unit is the first resource. Based on this, frequency-domain resource unit 1 (subcarrier 1), frequency-domain resource unit 2 (subcarrier 2), and frequency-domain resource unit 7 (subcarrier 7) are first frequency-domain resource units.

Exemplarily, if the frequency-domain resource unit is a subcarrier group, i.e., multiple consecutive subcarriers, it is assumed that the first frequency band includes 5 subcarrier groups, and each subcarrier group includes 2 subcarriers, where subcarrier 0 and subcarrier 1 are frequency-domain resource unit 0 (subcarrier group 0), subcarrier 2 and subcarrier 3 are frequency-domain resource unit 1 (subcarrier group 1), ..., and subcarrier 8 and subcarrier 9 are frequency-domain resource unit 4 (subcarrier group 4). Therefore, N is 5, which means that the first indication information includes 5 bits. For example, the first indication information is "10010", and a bit value of 1 represents that the frequency-domain resource unit (subcarrier group) is the first resource. Based on this, frequency-domain resource unit 0 (subcarrier group 0, including subcarrier 0 and subcarrier 1) and frequency-domain resource unit 3 (subcarrier group 3, including subcarrier 6 and subcarrier 7) are first frequency-domain resource units.

In the above method, each frequency domain resource is one RB, an RB group, one subcarrier or a subcarrier group, and based on the first indication information, it may be determined whether the one RB, the RB group, the one subcarrier or the subcarrier group is the first frequency-domain resource unit respectively. In this method, the accurate first frequency-domain resource unit may be obtained. Furthermore, the first frequency-domain resource unit is not used to transmit a communication signal, which reduces interference between the communication signal and other signals, and improves the performance and reliability of the communication system.

In some embodiments, the first indication information is used to determine a starting frequency-domain position of the first frequency-domain resource and/or the number of first frequency-domain resource units.

The starting frequency-domain position refers to, in the frequency domain, a frequency-domain position occupied by the first one among the one or more first frequency-domain resource units. The first one of the frequency-domain resource units refers to a frequency-domain resource unit corresponding to the lowest frequency or highest frequency among the first frequency-domain resource units.

Exemplarily, when the frequency-domain resource unit is one RB, as illustrated in subgraph (c) of FIG. 5, the first frequency band includes 10 RBs, and each frequency-domain resource unit includes one RB, where RB0 is frequency-domain resource unit 0, RB1 is frequency-domain resource unit 1, ..., and RB9 is frequency-domain resource unit 9. The first indication information may indicate that the starting frequency-domain position is frequency-domain resource unit 0 (RB0) and the number of first frequency-domain resource units is 3, so that RB0, RB1 and RB2 are the first frequency-domain resource units (areas filled with diagonal lines).

Exemplarily, when each frequency-domain resource unit is an RB group, i.e., multiple consecutive RBs, it is assumed that the first frequency band includes 5 RB groups, and each RB group includes 2 RB, where RB0 and RB1 are frequency-domain resource unit 0 (RB group 0), RB2 and RB3 are frequency-domain resource unit 1 (RB group 1), ..., and RB8 and RB9 are frequency-domain resource unit 4 (RB group 4). The first indication information may indicate that the starting frequency-domain position is frequency-domain resource unit 0 and the number of first frequency-domain resource units is 2, so that frequency-domain resource unit 0 (RB group 0, including RB0 and RB1) and frequency-domain resource unit 1 (RB group 1, including RB2 and RB3) are the first frequency-domain resource units.

Exemplarily, when the frequency-domain resource unit is one subcarrier, it is assumed that the first frequency band includes 10 subcarriers, and each frequency-domain resource unit includes one subcarrier where subcarrier 0 is frequency-domain resource unit 0, subcarrier 1 is frequency-domain resource unit 1, ..., and subcarrier 9 is frequency-domain resource unit 9. The first indication information may indicate that the starting frequency-domain position is frequency-domain resource unit 0 (subcarrier 0) and the number of first frequency-domain resource units is 3, so that subcarrier 0, subcarrier 1, and subcarrier 2 are the first frequency-domain resource units.

Exemplarily, when each frequency-domain resource unit is a subcarrier group, i.e., multiple consecutive subcarriers, it is assumed that the first frequency band includes 5 subcarrier groups, and each subcarrier group includes 2 subcarriers, where subcarrier 0 and subcarrier 1 are frequency-domain resource unit 0 (subcarrier group 0), subcarrier 2 and subcarrier 3 are frequency-domain resource unit 1 (subcarrier group 1), ..., and subcarrier 8 and subcarrier 9 are frequency-domain resource unit 4 (subcarrier group 4). The first indication information may indicate that the starting frequency-domain position is frequency-domain resource unit 0 and the number of first frequency-domain resource units is 2. Therefore, frequency-domain resource unit 0 (subcarrier group 0, including subcarrier 0 and subcarrier 1) and frequency-domain resource unit 1 (subcarrier group 1, including subcarrier 2 and subcarrier 3) are the first frequency-domain resource units.

In the above method, the first frequency-domain resource units may be determined based on the starting frequency-domain position of the first frequency-domain resource and/or the number of the first frequency-domain resource units, and the first frequency-domain resource units are consecutive. In the method, in a case where the number of frequency-domain resource units in the first frequency band is relatively large, the first indication information may be transmitted using fewer bits, thereby saving channel resources and bandwidth.

In some embodiments, the first indication information includes interval information, the interval information is used to indicate the number of frequency-domain resource units that are spaced between any two adjacent first frequency-domain resource units among the plurality of first frequency domain resource units. For example, in a case where the interval information is 1, it indicates that there is one frequency-domain resource unit between two adjacent first frequency-domain resource units among the plurality of first frequency domain resource units.

In some embodiments, the first frequency-domain resource units are determined based on the starting frequency-domain position of the first frequency-domain resource, the number of the first frequency-domain resource units and the interval information. Exemplarily, in a case where the frequency-domain resource unit is one RB, the first frequency band includes 10 RBs, and each frequency-domain resource unit includes one RB, where RB0 is frequency-domain resource unit 0, RB1 is frequency-domain resource unit 1, ..., and RB9 is frequency-domain resource unit 9. The first indication information may indicate that the starting frequency-domain position is frequency-domain resource unit 0 (RB0), the number of the first frequency-domain resource units is 3, and the interval information is 1, so that RB0, RB2, and RB4 are the first frequency-domain resource units.

In the above method, the first frequency-domain resource units may be determined based on the starting frequency-domain position of the first frequency-domain resource, the number of the first frequency-domain resource units and the interval information, and the plurality of first frequency domain resource units are non-consecutive frequency domain resource units, which enhances the flexibility and diversity of the indication of the first frequency-domain resource units.

In some embodiments, the first indication information includes at least one of a first period, a first offset value, or a first quantity. The first period is used to indicate the number of frequency-domain resource units included in each frequency-domain resource unit period in the first frequency band, the first offset value is used to indicate a position of a first one of the first frequency-domain resource units in each frequency-domain resource unit period, and the first quantity is used to indicate the number of first frequency-domain resource units in each frequency-domain resource unit period.

The frequency-domain resource period refers to a set of consecutive frequency-domain resource units, representing a consecutive frequency range in the frequency domain. The first frequency band includes at least one frequency-domain resource period. Each frequency-domain resource period includes at least one frequency-domain resource unit. The first offset value refers to the frequency-domain position of the first one of the first frequency-domain resource units in each frequency-domain resource period.

Exemplarily, as illustrated in subgraph (d) of FIG. 5, when the frequency-domain resource unit is one RB, in the first indication information, the first period may be 10, which means that the number of RBs included in each frequency-domain resource unit period is 10. It is assumed that, in each frequency-domain resource unit period, RB0 is frequency-domain resource unit 0, RB1 is frequency-domain resource unit 1, ..., and RB9 is frequency-domain resource unit 9. In the first indication information, the first offset value may be 0, and the first quantity may be 2. That is, in each frequency-domain resource unit period, the first one of the first frequency-domain resource units is frequency-domain resource unit 0 (RB0), and the number of the first frequency-domain resource units is 2. Based on this, in each frequency-domain resource unit period, frequency-domain resource unit 0 (RB0) and frequency-domain resource unit 1 (RB1) are the first frequency-domain resource units. As illustrated in subgraph (d) of FIG. 5, in the first frequency-domain resource unit period, frequency-domain resource unit 51 and frequency-domain resource unit 52 are the first frequency-domain resource units, and in the last frequency-domain resource unit period, frequency-domain resource unit 53 and frequency-domain resource unit 54 are the first frequency-domain resource units.

Exemplarily, when each frequency-domain resource unit is an RB group, i.e., multiple consecutive RBs, in the first indication information, the first period may be 5, which means that the number of RB groups included in each frequency-domain resource unit period is 5. It is assumed that in each frequency-domain resource unit period, RB0 and RB1 are frequency-domain resource unit 0, RB2 and RB3 are frequency-domain resource unit 1, ..., and RB8 and RB9 are frequency-domain resource unit 4. In the first indication information, the first offset value may be 1, and the first quantity may be 2. That is, in each frequency-domain resource unit period, the first one of the first frequency-domain resource units is frequency-domain resource unit 1 (including RB2 and RB3), and the number of first frequency-domain resource units is 2. Based on this, in each frequency-domain resource unit period, frequency-domain resource unit 1 (including RB2 and RB3) and frequency-domain resource unit 2 (including RB4 and RB5) are the first frequency-domain resource units.

Exemplarily, when the frequency-domain resource unit is one subcarrier, in the first indication information, the first period may be 10, which means that the number of the subcarriers included in each frequency-domain resource unit period is 10. It is assumed that, in each frequency-domain resource unit period, subcarrier 0 is frequency-domain resource unit 0, subcarrier 1 is frequency-domain resource unit 1, ..., and subcarrier 9 is frequency-domain resource unit 9. In the first indication information, the first offset value may be 1, and the first quantity may be 2. That is, in each frequency-domain resource unit period, the first one of the first frequency-domain resource units is frequency-domain resource unit 1 (subcarrier 1), and the number of the first frequency-domain resource units is 2. Based on this, in each frequency-domain resource unit period, frequency-domain resource unit 1 (subcarrier 1) and frequency-domain resource unit 2 (subcarrier 2) are the first frequency-domain resource units.

Exemplarily, when each frequency-domain resource unit is a subcarrier group, i.e., multiple consecutive subcarriers, in the first indication information, the first period may be 5, which means that the number of subcarrier groups included in each frequency-domain resource unit period is 5. It is assumed that, in each frequency-domain resource unit period, subcarrier 0 and subcarrier 1 are frequency-domain resource unit 0, subcarrier 2 and subcarrier 3 are frequency-domain resource unit 1, ..., and subcarrier 8 and subcarrier 9 are frequency-domain resource unit 4. In the first indication information, the first offset value may be 2, and the first quantity may be 2. That is, in each frequency-domain resource unit period, the first one of the first frequency-domain resource units is frequency-domain resource unit 2 (including subcarrier 4 and subcarrier 5), and the number of first frequency-domain resource units is 2. Based on this, in each frequency-domain resource unit period, frequency-domain resource unit 2 (including subcarrier 4 and subcarrier 5) and frequency-domain resource unit 3 (including subcarrier 6 and subcarrier 7) are the first frequency-domain resource units.

In the above method, the first frequency-domain resource units are determined based on the first period, the first offset value and the first quantity. In this method, the distribution and the number of the first frequency-domain resource units may be periodically determined, thereby enhancing the flexibility of the indication of the first frequency-domain resource unit.

In some embodiments, the frequency-domain information includes only the first indication information, and the frequency-domain resource is one RB or multiple consecutive RBs. When the one RB or the multiple consecutive RBs are the first frequency-domain resource, all subcarriers included in the one RB or the multiple consecutive RBs are first resources.

In some embodiments, the frequency-domain information includes second indication information, the second indication information is used to determine a first subcarrier in a first frequency-domain resource unit, the first frequency-domain resource unit is a frequency-domain resource unit in which the first resource is located, and the first subcarrier is a subcarrier in which the first resource is located.

Each first frequency-domain resource unit of the one or more first frequency-domain resource units may be one RB or an RB group (multiple consecutive RBs). The one RB or the RB group includes at least one subcarrier.

In some embodiments, when the frequency-domain information includes only the second indication information, the first frequency-domain resource unit may be predetermined or indicated, for example, the first frequency-domain resource unit may be specified by a protocol or indicated by a network device to a terminal device. The protocol specifies the first frequency-domain resource unit in the first frequency band, for example, it may specify that the first two frequency-domain resource units in the first frequency band are the first frequency-domain resource unit, and it may also specify that the last two frequency-domain resource units in the first frequency band are the first frequency-domain resource unit, which is not limited in the present application.

In the above method, the first subcarrier in the first frequency-domain resource unit may be determined based on the second indication information, and the first subcarrier is the first resource that is not used to transmit a communication signal. The other subcarriers included in the first frequency-domain resource unit, excluding the first subcarriers, may still be used to transmit the communication signal, which is conducive to improving resource utilization.

In some embodiments, the first frequency-domain resource unit includes M subcarriers, and the second indication information includes M bits. Each bit of the M bits corresponds to two values: a first value and a second value, where the first value is different from the second value. Exemplarily, the first value may be 0, and the second value may be 1. When the value of the bit corresponding to a subcarrier is 1, the subcarrier is a first subcarrier, and when the value of the bit corresponding to a subcarrier is 0, the subcarrier is not the first subcarrier. Alternatively, when the value of the bit corresponding to a subcarrier is 0, the subcarrier is the first frequency-domain resource unit, and when the value of the bit corresponding to a subcarrier is 1, the subcarrier is not the first subcarrier, which is not limited in the present application.

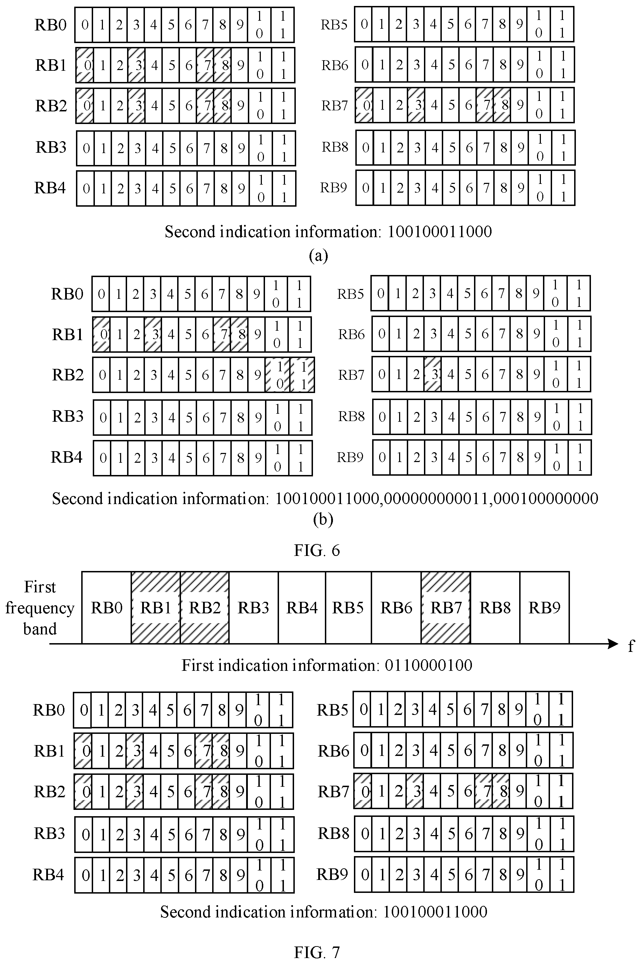

In some embodiments, M is equal to the number of subcarriers included in the first frequency-domain resource unit. When there is only one first frequency-domain resource unit, or there are multiple first frequency-domain resource units, and the positions of the first subcarriers in the multiple first frequency-domain resource units are the same, M is equal to the number of subcarriers included in the first frequency-domain resource unit. Exemplarily, as illustrated in subgraph (a) of FIG. 6, it is assumed the first frequency band includes 10 frequency-domain resource units, and each frequency-domain resource unit includes one RB, and it is assumed that the first frequency-domain resource units are RB1, RB2, and RB7, and each first frequency-domain resource unit includes 12 subcarriers. Based on this, the second indication information includes 12 bits, which are "100100011000", that is, subcarrier 0, subcarrier 3, subcarrier 7 and subcarrier 8 of each of RB1, RB2 and RB7 are first subcarriers.

In some embodiments, M is equal to a product of the number of subcarriers included in the first frequency-domain resource unit and the number of first frequency-domain resource units.

When there is one first frequency-domain resource unit, M is equal to the number of subcarriers included in the first frequency-domain resource unit.

There are multiple first frequency-domain resource units, and there are at least two different positions for the first subcarriers in the multiple first frequency-domain resource units. Exemplarily, as illustrated in subgraph (b) of FIG. 6, it is assumed the first frequency band includes 10 frequency-domain resource units, and each frequency-domain resource unit includes one RB, and it is assumed the first frequency-domain resource units are RB1, RB2, and RB7, which means that the number of the first frequency-domain resource units is 3, and the number of the subcarriers included in each first frequency-domain resource unit is 12. Based on this, the second indication information includes 36 bits, which may be "100100011000,000000000011,000100000000". Therefore, subcarrier 0, subcarrier 3, subcarrier 7 and subcarrier 8 of RB1, subcarrier 10 and subcarrier 11 of RB2, and subcarrier 3 of RB7 are the first subcarriers.

When there are multiple first frequency-domain resource units and the positions of the first subcarriers in the multiple first frequency-domain resource units are the same, the second indication information may also use the above method to implement indication. That is, M is equal to the product of the number of subcarriers included in the first frequency-domain resource unit and the number of first frequency-domain resource units, which is not limited in the present application.

In the above method, when the positions of the first subcarriers in the multiple first frequency-domain resource units are the same, the second indication information includes fewer bits, which helps to reduce the overhead for transmitting the second indication information. When the positions of the first subcarriers in the multiple first frequency-domain resource units are different, the second indication information includes more bits, which enhances the flexibility and diversity of the indication of the first subcarrier.

In some embodiments, the frequency-domain information includes the first indication information and the second indication information. The first indication information is used to determine the first frequency-domain resource unit(s) in the first frequency band, and the second indication information is used to determine the first subcarrier(s) in the first frequency-domain resource unit(s). As illustrated in FIG. 7, the first frequency band includes 10 frequency-domain resource units, each frequency-domain resource unit includes one RB, and the positions of the first subcarriers in each frequency-domain resource unit are the same. Exemplarily, the first information is "0110000100", the first frequency-domain resource units are RB1, RB2, and RB7. The second indication information is "100100011000", subcarrier 0, subcarrier 3, subcarrier 7 and subcarrier 8 of each of RB1, RB2 and RB7 are the first subcarriers. In the above method, the first subcarrier(s) in the first frequency band may be determined based on the first indication information and the second indication information, which makes the indication of first resources more flexible and diverse.

In some embodiments, the first information includes time-domain information, the time-domain information is used to determine a time-domain position of a first resource.

The time-domain position refers to a specific position or range of the first resource in time.

In some embodiments, the time-domain information includes third indication information, the third indication information is used to determine a first time-domain unit in each time-domain period, and the first time-domain unit is a time-domain unit in which the first resource is located.

The time-domain period refers to a set of consecutive time-domain units, representing a consecutive time range in the time domain. Each time-domain period includes one or more time-domain units. Among the one or more time-domain units, there may be at least one first time-domain unit, and the third indication information is used to indicate the at least one first time-domain unit. In addition, the time-domain period may be predetermined or indicated, for example, the time-domain period may be specified by a protocol or indicated by a network device to a terminal device, which is not limited in the present application.

The time-domain unit refers to a resource division granularity in the time domain. The time-domain unit may be one slot, multiple consecutive slots (e.g., referred to as a slot group), one symbol, or multiple consecutive symbols (e.g., referred to as a symbol group), which is not limited in the present application.

In some embodiments, each time-domain period includes P time-domain units, the third indication information includes P bits, each of the P bits is used to indicate whether a respective one of the P time-domain units is the first time-domain unit, and P is a positive integer.

Exemplarily, P is equal to 14, which represents that each time-domain period includes 14 time-domain units, and the third indication information includes 14 bits. Each of the 14 bits is used to indicate whether a respective one of the 14 time-domain units is the first time-domain unit.

Exemplarily, when the time-domain unit is one slot, each time-domain period includes 14 slots, and the third indication information includes 14 bits. Each bit is used to indicate whether one slot of the 14 slots is a first slot, where the first slot is a slot in which the first resource is located.

Exemplarily, when the time-domain unit is a slot group, the slot group refers to a set consisting of at least two consecutive slots. Each time-domain period includes 14 slot groups, and the third indication information includes 14 bits. Each bit is used to indicate whether one slot group of the 14 slot groups is a first slot group, where the first slot group is a slot group in which the first resource is located.

Exemplarily, when the time-domain unit is one symbol, each time-domain period includes 10 symbols, and the third indication information includes 10 bits. Each bit is used to indicate whether one symbol of the 10 symbols is a first symbol, where the first symbol is a symbol in which the first resource is located.

Exemplarily, when the time-domain unit is a symbol group, the symbol group refers to a set consisting of at least two consecutive symbols. Each time-domain period includes 10 symbol groups, and the third indication information includes 10 bits. Each bit is used to indicate whether one symbol group of the 10 symbol groups is a first symbol group, where the first symbol group is a symbol group in which the first resource is located.

In the above method, when the time-domain unit is a slot, slot resources that cannot be used to transmit a communication signal may be obtained through this method. When the time-domain unit is a symbol, symbol resources that cannot be used to transmit a communication signal may be obtained through this method. On one hand, the first resource is not used to transmit the communication signal, which may ensure the quality and performance of communication transmission of the communication signal and other signals in the system. On the other hand, refining the indication of the time-domain position of unavailable resources to a symbol level, enables unavailable resources to be obtained more accurately. When one slot includes multiple symbols, the symbols included in the first resource are determined, and then other symbols not included in the first resource may be used to transmit the communication signal, thereby improving the resource utilization of communication signal transmission. For example, in a case where a slot includes 14 symbols, where 5 symbols are included in the first resource, the remaining 9 symbols of the slot may still be used to transmit the communication signal, thereby improving the resource utilization of communication signal transmission.

In some embodiments, the third indication information includes P bits, and each bit of the P bits corresponds to two values: a first value and a second value, where the first value is different from the second value. Exemplarily, the first value may be 0, and the second value may be 1. When the value of the bit corresponding to a time-domain unit is 1, the time-domain unit is the first time-domain unit, and when the value of the bit corresponding to a time-domain unit is 0, the time-domain unit is not the first time-domain unit. Alternatively, when the value of the bit corresponding to a time-domain unit is 0, the time-domain unit is the first time-domain unit, and when the value of the bit corresponding to a time-domain unit is 1, the time-domain unit is not the first time-domain unit, which is not limited in the present application.

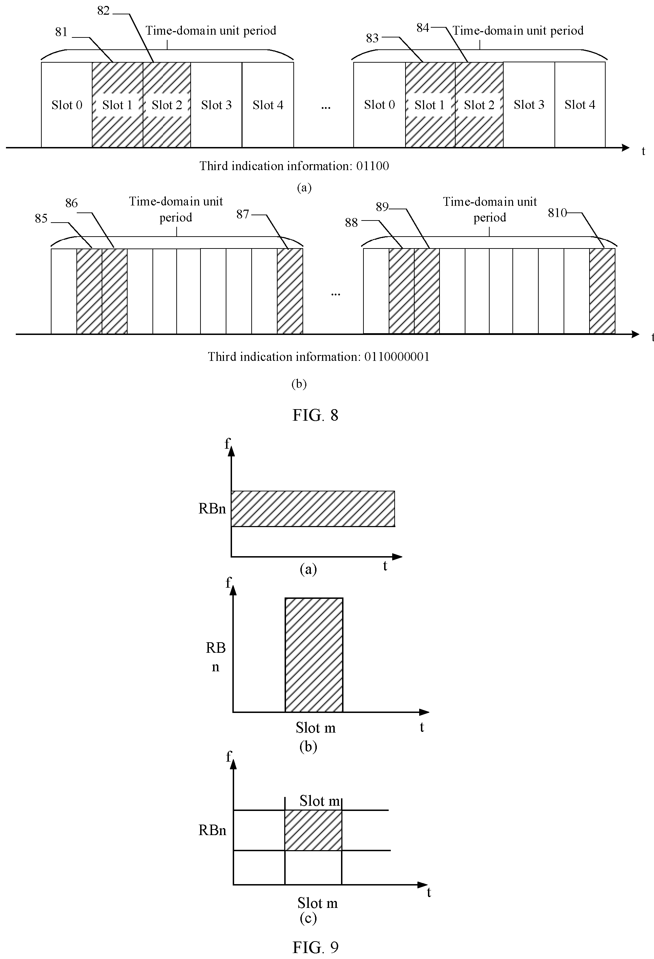

In some embodiments, in a case where the time-domain unit is one slot, for example, as illustrated in subgraph (a) of FIG. 8, each time-domain period includes 5 slots. It is assumed that, in each time-domain period, slot 0 is time-domain unit 0, slot 1 is time-domain unit 1, ..., and slot 4 is time-domain unit 4. Therefore, P is equal to 5, and the third indication information includes 5 bits. Exemplarily, the third indication information is "01100". Based on this, in each time-domain period, time-domain unit 1 (i.e., slot 1, such as slot 81 and slot 83) and time-domain unit 2 (i.e., slot 2, such as slot 82 and slot 84) are the first time-domain units.

In some embodiments, if the time-domain unit is a slot group, for example, it is assumed that each time-domain period includes 5 slot groups, and each slot group includes 2 slots. Where slot group 0 (including slot 0 and slot 1) is time-domain unit 0, slot group 1 (including slot 2 and slot 3) is time-domain unit 1, ..., and slot group 4 (including slot 9 and slot 10) is time-domain unit 4. Therefore, P is equal to 5, and the third indication information includes 5 bits. Exemplarily, the third indication information is "01100". Based on this, in each time-domain period, time-domain unit 1 (including slot 2 and slot 3) and time-domain unit 2 (including slot 4 and slot 5) are the first time-domain units.

In some embodiments, if the time-domain unit is one symbol, as illustrated in subgraph (b) of FIG. 8, each time-domain period includes 10 symbols. Where symbol 0 is time-domain unit 0, symbol 1 is time-domain unit 1, ..., and symbol 9 is time-domain unit 9. Therefore, P is equal to 10, and the third indication information includes 10 bits. Exemplarily, the third indication information is "0110000001". Therefore, in each time-domain unit period, time-domain unit 1 (i.e., symbol 1, such as symbol 85 and symbol 88), time-domain unit 2, (i.e., symbol 2, such as symbol 86 and symbol 89), and time-domain unit 9 (i.e., symbol 9, such as symbol 87 and symbol 810) are the first time-domain units.

In some embodiments, if the time-domain unit is a symbol group, for example, it is assumed that each time-domain period includes 5 symbol groups, and each symbol group includes 2 symbols. Where symbol group 0 (including symbol 0 and symbol 1) is time-domain unit 0, symbol group 1 (including symbol 2 and symbol 3) is time-domain unit 1, ..., and symbol group 4 (including symbol 9 and symbol 10) is time-domain unit 4. Therefore, P is equal to 5, and the third indication information includes 5 bits. Exemplarily, the third indication information is "01100". Based on this, in each time-domain unit period, time-domain unit 1 (including symbol 2 and symbol 3) and time-domain unit 2 (including symbol 4 and symbol 5) are the first time-domain units. In the above method, refining the indication of the time-domain position of unavailable resources to the symbol level, enables the first resources that cannot be used to transmit a communication signal to be obtained more accurately. When a slot includes multiple symbols, the symbols included in the first resource are determined, and the other symbols not included in the first resource may be used to transmit the communication signal, thereby improving the resource utilization of communication signal transmission.

In some embodiments, the third indication information is used to determine a starting time-domain position of the first time-domain unit in the time-domain period and/or the number of first time-domain units in the time-domain period.

The starting time-domain position refers to, in the time domain, a time-domain position occupied by the first one among one or more first time-domain units. The first one of the first time-domain units refers to a time-domain unit corresponding to the earliest time or the latest time among the time-domain units in each time-domain period.

Exemplarily, in a case where each time-domain unit is one slot, it is assumed that each time-domain period includes 10 slots, and each time-domain unit includes 1 slot. Where slot 0 is time-domain unit 0, slot 1 is time-domain unit 1, ..., and slot 9 is time-domain unit 9. The third indication information may indicate that the starting time-domain position is time-domain unit 0 (slot 0), and the number of the first time-domain units is 3, so that slot 0, slot 1 and slot 2 are the first time-domain units.

Exemplarily, in a case where each time-domain unit is a slot group, i.e., multiple consecutive slots, it is assumed that each time-domain period includes 5 slot groups, and each slot group includes 2 slots. Where slot 0 and slot 1 are time-domain unit 0 (slot group 0), slot 2 and slot 3 are time-domain unit 1 (slot group 1), ..., and slot 8 and slot 9 are time-domain unit 4 (slot group 4). The third indication information may indicate that the starting time-domain position is time-domain unit 0 and the number of the first time-domain units is 2, so that time-domain unit 0 (slot group 0, including slot 0 and slot 1) and time-domain unit 1 (slot group 1, including slot 2 and slot 3) are the first time-domain units.

Exemplarily, in a case where each time-domain unit is one symbol, it is assumed that each time-domain period includes 10 symbols, and each time-domain unit includes 1 symbol. Where symbol 0 is time-domain unit 0, symbol 1 is time-domain unit 1, ..., and symbol 9 is time-domain unit 9. The third indication information may indicate that the starting time-domain position is time-domain unit 0 (symbol 0) and the number of the first time-domain units is 3, so that symbol 0, symbol 1 and symbol 2 are the first time-domain units.

Exemplarily, in a case where each time-domain unit is a symbol group, i.e., multiple consecutive symbols, it is assumed that each time-domain period includes 5 symbol groups, and each symbol group includes 2 symbols. Where symbol 0 and symbol 1 are time-domain unit 0 (symbol group 0), symbol 2 and symbol 3 are time-domain unit 1 (symbol group 1), ..., and symbol 8 and symbol 9 are time-domain unit 4 (symbol group 4). The third indication information may indicate that the starting time-domain position is time-domain unit 0 and the number of the first time-domain units is 2, so that time-domain unit 0 (symbol group 0, including symbol 0 and symbol 1) and time-domain unit 1 (symbol group 1, including symbol 2 and symbol 3) are the first time-domain units.

In the above method, the first frequency-domain resource unit(s) may be determined based on the starting time-domain position of the first time-domain unit and/or the number of the first time-domain units, and the first time-domain units are consecutive. In this method, when the time-domain units is relatively large, the third indication information may be transmitted using fewer bits, thereby saving channel resources and bandwidth.

In some embodiments, the third indication information includes a second period, a second offset value, and a second quantity. The second period is used to indicate the number of time-domain units included in each time-domain period; the second offset value is used to indicate a position of the first one of first time-domain units in each time-domain period; and the second quantity is used to indicate the number of first time-domain units in each time-domain period.

Exemplarily, in a case where each time-domain unit is one slot, in the third indication information, the second period may be 10, which means that the number of slots included in each time-domain period is 10. It is assumed that, in each time-domain period, slot 0 is time-domain unit 0, slot 1 is time-domain unit 1, ..., and slot 9 is time-domain unit 9. In the third indication information, the second offset value may be 1, and the second quantity may be 2. That is, in each time-domain period, the first one of the first time-domain units is time-domain unit 1 (slot 1), and the number of first time-domain units is 2. Based on this, in each time-domain period, time-domain unit 1 (slot 1) and time-domain unit 2 (slot 2) are the first time-domain units.

Exemplarily, in a case where each time-domain unit is a slot group, i.e., multiple consecutive slots, in the third indication information, the second period may be 5, which means that the number of slot groups included in each time-domain period is 5. It is assumed that, in each time-domain period, slot 0 and slot 1 are time-domain unit 0, slot 2 and slot 3 are time-domain unit 1, ..., and slot 8 and slot 9 are time-domain unit 4. In the third indication information, the second offset value may be 1, and the second quantity may be 2. That is, in each time-domain period, the first one of the first time-domain units is time-domain unit 1 (slot 2 and slot 3), and the number of first time-domain units is 2. Based on this, in each time-domain period, time-domain unit 1 (including slot 2 and slot 3) and time-domain unit 2 (including slot 4 and slot 5) are the first time-domain units.

Exemplarily, in a case where each time-domain unit is one symbol, in the third indication information, the second period may be 10, which means that the number of slots included in each time-domain period is 10. It is assume that, in each time-domain period, symbol 0 is time-domain unit 0, symbol 1 is time-domain unit 1, ..., and symbol 9 is time-domain unit 9. In the third indication information, the second offset value may be 0, and the second quantity may be 2. That is, in each time-domain period, the first one of the first time-domain units is time-domain unit 0 (symbol 0), and the number of first time-domain units is 2. Based on this, in each time-domain period, time-domain unit 0 (symbol 0) and time-domain unit 1 (symbol 1) are the first time-domain units.

Exemplarily, in a case where each time-domain unit is a symbol group, i.e., multiple consecutive symbols, in the third indication information, the second period may be 5, which means that the number of symbol groups included in each time-domain period is 5. It is assumed that, in each time-domain period, symbol 0 and symbol 1 are time-domain unit 0, symbol 2 and symbol 3 are time-domain unit 1, ..., and symbol 8 and symbol 9 are time-domain unit 4. In the third indication information, the second offset value may be 1, and the second quantity may be 2. That is, in each time-domain period, the first one of the first time-domain units is time-domain unit 0 (symbol 0 and symbol 1), and the number of first time-domain units is 2. Based on this, in each time-domain period, time-domain unit 1 (including symbol 2 and symbol 3) and time-domain unit 2 (including symbol 4 and symbol 5) are the first time-domain units.

In the above method, the first time-domain units may be determined based on the second period, the second offset value, and the second quantity. In this method, the distribution and the number of the first time-domain units may be periodically determined, thereby enhancing the flexibility of the indication of the first time-domain unit(s).

In some embodiments, in a case where the time-domain information includes only the third indication information, and the time-domain unit is one slot or multiple consecutive slots, when the one slot or the multiple consecutive slots are the first time-domain unit, all symbols included in the one slot or the multiple consecutive slots are first resources.

In some embodiments, the time-domain information includes fourth indication information, the fourth indication information is used to determine a first time-domain subunit in a first time-domain unit, the first time-domain unit is a time-domain unit in which the first resource is located, the first time-domain subunit is a time-domain subunit in which the first resource is located, and each time-domain unit includes multiple time-domain subunits.

Each first time-domain unit includes at least one time-domain subunit. In this case, each first time-domain unit of one or more first time-domain units may be one slot or a slot group (multiple consecutive slots). Each time-domain subunit of the at least one time-domain subunits may be one symbol or a symbol group (multiple consecutive symbols).

In some embodiments, in a case where the time-domain information includes only the fourth indication information, the first time-domain unit may be predetermined or indicated, for example, the first time-domain unit may be specified by a protocol. The protocol specifies the first time-domain unit(s) in each time-domain period. For example, it may specify that the first two time-domain units in each time-domain period are the first time-domain units, and it may also specify that the last two time-domain units in each time-domain period are the first time-domain units, which is not limited in the present application.

In some embodiments, the first time-domain unit includes Q time-domain subunits, the fourth indication information includes Q bits, each of the Q bits is used to indicate whether a respective one of the Q time-domain subunits is the first time-domain subunit, and Q is a positive integer.

One or more first time-domain units include Q time-domain subunits, and each bit of the Q bits is used to indicate whether a respective one of the Q time-domain subunits is the first time-domain subunit.

When the time-domain subunit is one symbol, the one or more first time-domain units include Q symbols, and each bit of the Q bits is used to indicate whether one symbol of the Q symbols is the first time-domain subunit.

When the time-domain subunit is a symbol group, the one or more first time-domain units include Q symbol groups, and each bit of the Q bits is used to indicate whether one symbol group of the Q symbol groups is the first time-domain subunit.

In the above method, according to the fourth indication information in the time-domain information, the time-domain position of the first resource is located at the slot level and symbol level granularity, which may implement accurate localization and efficient utilization of the first resources, thereby achieving the technical effect of improving resource utilization and data transmission efficiency.

In some embodiments, when a certain symbol group is a first time-domain subunit, all symbols included in the symbol group are unavailable resources.

In some embodiments, the fourth indication information includes Q bits, and each bit of the Q bits corresponds to two values: a first value and a second value, where the first value is different from the second value. Exemplarily, the first value may be 0, and the second value may be 1. When the value of the bit corresponding to a time-domain subunit is 1, the time-domain subunit is the first time-domain subunit, and when the value of the bit corresponding to the time-domain subunit is 0, the time-domain subunit is not the first time-domain subunit. Alternatively, when the value of the bit corresponding to a time-domain subunit is 0, the time-domain subunit is the first time-domain subunit, and when the value of the bit corresponding to the time-domain subunit is 1, the time-domain subunit is not the first time-domain subunit, which is not limited in the present application.

In some embodiments, Q is equal to the number of time-domain subunits included in the first time-domain unit. When there is only one first time-domain unit, or when there are multiple first time-domain units, and the positions of the first time-domain subunits in the multiple first time-domain units are the same, Q is equal to the number of time-domain subunits included in the first time-domain unit. Exemplarily, it is assumed that each time-domain period includes 10 time-domain units, each time-domain unit is one slot, and each slot includes 14 symbols (time-domain subunits), and it is assumed that the first time-domain units are slot 1, slot 2, and slot 7. Therefore, the fourth indication information includes 14 bits, which may be "10010010011100". That is, time-domain subunit 0 (symbol 0), time-domain subunit 3 (symbol 3), time-domain subunit 7 (symbol 7), and time-domain subunit 8 (symbol 8) of each of slot 1, slot 2 and slot 7 are the first time-domain subunits.

In some embodiments, Q is equal to a product of the number of time-domain subunits included in the first time-domain unit and the number of first time-domain units. When there is one first time-domain unit, Q is equal to the number of time-domain subunits included in the first time-domain unit.

When there are multiple the first time-domain units, and there are at least two different positions for the first time-domain subunits in the multiple first time-domain units. Exemplarily, it is assumed that each time-domain period includes 10 time-domain units, and each time-domain unit includes 14 symbols (time-domain subunits), and it is assumed that the first time-domain units are slot 0 and slot 1, which meaning that the number of first time-domain units is 2, and the number of time-domain subunits included in each first time-domain unit is 14. Therefore, the fourth indication information includes 28 bits which may be "10010010011100,10010000000000". Based on this, time-domain subunit 0 (symbol 0), time-domain subunit 3 (symbol 3), time-domain subunit 6 (symbol 6), time-domain subunit 9 (symbol 9), time-domain subunit 10 (symbol 10), and time-domain subunit 11 (symbol 11) of slot 0 are the first time-domain subunits, and time-domain subunit 0 (symbol 0) and time-domain subunit 3 (symbol 3) of slot 1 are the first time-domain subunits.

When there are multiple first time-domain units, and the positions of the first time-domain subunits in the multiple first time-domain units are the same, the fourth indication information may also use the above method to implement indication. That is, Q is equal to the product of the number of the subcarriers included in the first frequency-domain resource unit and the number of first frequency-domain resource units, which is not limited in the present application.

In the above method, when the positions of first time-domain subunits in the multiple first time-domain units are the same, the fourth indication information includes fewer bits, which helps to reduce the overhead for transmitting the fourth indication information. When the positions of the first time-domain subunits in the multiple first time-domain units are different, the fourth indication information includes more bits, which enhances the flexibility and diversity of the indication of the first time-domain subunit.

In some embodiments, the time-domain information includes the third indication information and the fourth indication information. The third indication information is used to determine the first time-domain unit(s) in each time-domain period, and the fourth indication information is used to determine the first time-domain subunit(s) in the first time-domain unit(s). Each time-domain period includes 10 time-domain units, each time-domain unit includes one slot, one slot includes 14 symbols, and the positions of the first time-domain subunits in each time-domain unit are the same. Exemplarily, the third indication information may be "0110000100", so that the first time-domain units are slot 1, slot 2 and slot 7. The fourth indication information is "10010001100000", so that symbol 0, symbol 3, symbol 7 and symbol 8 of each of slot 1, slot 2, and slot 7 are the first time-domain subunits.

In some embodiments, when the first information includes only the frequency-domain information, the frequency-domain information is used to determine the frequency-domain position of the first resource. As illustrated in subgraph (a) of FIG. 9, it is assumed that the frequency-domain position of the first resource is RBn, RBn is the first resource in the entire time-domain range. When the first information includes only the time-domain information, the time-domain information is used to determine the time-domain position of the first resource. As illustrated in subgraph (b) of FIG. 9, it is assumed that the time-domain position of the first resource is slot m, slot m is the first resource in the entire frequency-domain. When the first information includes both the frequency-domain information and the time-domain information, as illustrated in subgraph (c) of FIG. 9, it is assumed that the frequency-domain position of the first resource is RBn, and the time-domain position of the first resource is slot m, the final position of the first resource may be determined based on the frequency-domain position of the first resource and the time-domain position of the first resource.

The technical solution provided by the present application, during a wireless communication procedure, the first resource is determined and the first resource is not used to transmit a communication signal, so that when the communication signal and other signals coexist, the communication signal and other signals are transmitted without using the same resource. This may effectively reduce communication interference between the communication signal and other signals, thereby improving communication efficiency. In addition, in a case where the first resource is used to transmit a sensing signal, the above method may effectively reduce communication interference between the communication signal and the sensing signal, thereby improving communication efficiency.

In the above method embodiments, the technical solution of the present application has been introduced and described only from the perspective of interaction between a terminal device and a network device. The above steps performed by the terminal device may be independently implemented as a wireless communication method on the terminal device side, and the above steps performed by the network device may be independently implemented as a wireless communication method on the network device side. Furthermore, the embodiments provided herein may be arbitrarily combined to form new embodiments, all of which fall within the scope of protection of the present application.

The following are apparatus embodiments of the present application, which may be used to perform the method embodiments of the present application. For details not disclosed in the apparatus embodiments of the present application, please refer to the method embodiments of the present application.

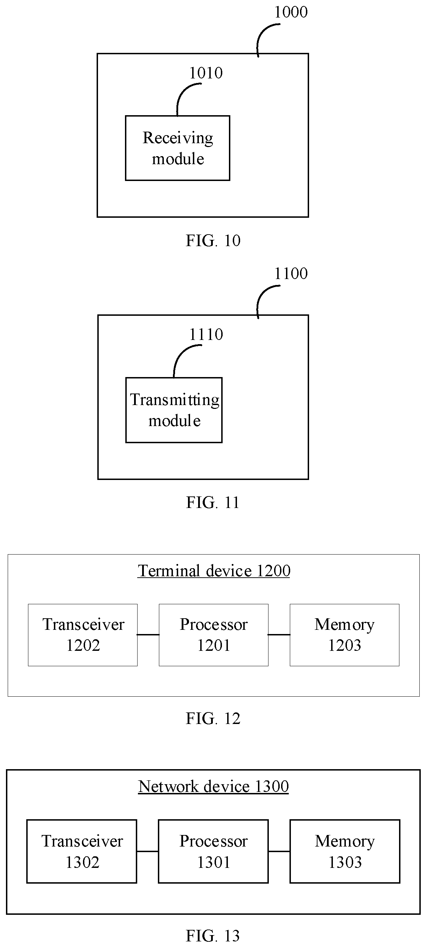

Please refer to FIG. 10, which illustrates a block diagram of an apparatus for a wireless communication method provided by an embodiment of the present application. The apparatus has functions of implementing the above wireless communication methods on the terminal device side. The functions may be implemented via hardware, or may also be implemented by executing corresponding software via hardware. The apparatus may be the above terminal device, or may also be disposed in the terminal device. As illustrated in FIG. 10, the apparatus 1000 includes a receiving module 1010.

The receiving module 1010 is configured to receive first information, where the first information is used to determine a first resource, the first resource is used to transmit a sensing signal, and the first resource is not used to transmit a communication signal.

In some embodiments, the first information includes frequency-domain information and/or time-domain information, where the frequency-domain information is used to determine a frequency-domain position of the first resource, and the time-domain information is used to determine a time-domain position of the first resource.

In some embodiments, the frequency-domain information includes first indication information, the first indication information is used to determine a first frequency-domain resource unit in a first frequency band, and the first frequency-domain resource unit is a frequency-domain resource unit in which the first resource is located.

In some embodiments, the first frequency band includes N frequency-domain resource units, the first indication information includes N bits, each of the N bits is used to indicate whether a respective one of the N frequency-domain resource units is the first frequency-domain resource unit, and N is a positive integer.

In some embodiments, the first indication information is used to determine a starting frequency-domain position of the first frequency-domain resource and/or the number of first frequency-domain resource units.

In some embodiments, the first indication information includes at least one of a first period, a first offset value, or a first quantity. Where the first period is used to indicate the number of frequency-domain resource units included in each frequency-domain resource unit period in the first frequency band, the first offset value is used to indicate a position of a first one of first frequency-domain resource units in each frequency-domain resource unit period, and the first quantity is used to indicate the number of first frequency-domain resource units in each frequency-domain resource unit period.

In some embodiments, the frequency-domain information includes second indication information, the second indication information is used to determine a first subcarrier in a first frequency-domain resource unit, the first frequency-domain resource unit is a frequency-domain resource unit in which the first resource is located, and the first subcarrier is a subcarrier in which the first resource is located.

In some embodiments, the first frequency-domain resource unit includes M subcarriers, the second indication information includes M bits, each of the M bits is used to indicate whether a respective one of the M subcarriers is the first subcarrier, and M is a positive integer.

In some embodiments, M is equal to the number of subcarriers included in the first frequency-domain resource unit, or, M is equal to a product of the number of subcarriers included in the first frequency-domain resource unit and the number of first frequency-domain resource units.

In some embodiments, N is determined based on the number of RBs included in the first frequency band and the number of RBs included in each of the frequency-domain resource units, and each of the frequency-domain resource units includes one RB or multiple consecutive RBs.

In some embodiments, a frequency-domain resource unit is a subcarrier.

In some embodiments, the first frequency band is a carrier or a BWP.

In some embodiments, the time-domain information includes third indication information, the third indication information is used to determine a first time-domain unit in each time-domain period, and the first time-domain unit is a time-domain unit in which the first resource is located.

In some embodiments, each time-domain period includes P time-domain units, the third indication information includes P bits, each of the P bits is used to indicate whether a respective one of the P time-domain units is the first time-domain unit, and P is a positive integer.

In some embodiments, the third indication information is used to determine a starting time-domain position of the first time-domain unit in the time-domain period and/or the number of first time-domain units in the time-domain period.

In some embodiments, the third indication information includes a second period, a second offset value, or a second quantity; where
the second period is used to indicate the number of time-domain units included in each time-domain period;
the second offset value is used to indicate a position of a first one of first time-domain units in each time-domain period; and
the second quantity is used to indicate the number of first time-domain units in each time-domain period.

In some embodiments, the time-domain information includes fourth indication information, the fourth indication information is used to determine a first time-domain subunit in a first time-domain unit, the first time-domain unit is a time-domain unit in which the first resource is located, the first time-domain subunit is a time-domain subunit in which the first resource is located, and each time-domain unit includes multiple time-domain subunits.

In some embodiments, the first time-domain unit includes Q time-domain subunits, the fourth indication information includes Q bits, each of the Q bits is used to indicate whether a respective one of the Q time-domain subunits is the first time-domain subunit, and Q is a positive integer.

In some embodiments, Q is equal to the number of time-domain subunits included in the first time-domain unit, or, Q is equal to a product of the number of time-domain subunits included in the first time-domain unit and the number of first time-domain units.

In some embodiments, a time-domain unit is a slot, and a time-domain subunit is a symbol or a symbol group.

In some embodiments, a time-domain unit is a symbol or a symbol group.

The technical solution provided by the embodiments of the present application, during a wireless communication procedure, the first resource is determined and the first resource is not used to transmit a communication signal, so that when the communication signal and other signals coexist, the communication signal and other signals are transmitted without using the same resource. This may effectively reduce communication interference between the communication signal and other signals, thereby improving communication efficiency. In addition, in a case where the first resource is used to transmit a sensing signal, the above method may effectively reduce communication interference between the communication signal and the sensing signal, thereby improving communication efficiency.

Please refer to FIG. 11, which illustrates a block diagram of a wireless communication apparatus provided by another embodiment of the present application. The apparatus has the functions of implementing the above wireless communication methods on the network device side. The functions may be implemented via hardware, or may also be implemented by executing corresponding software via hardware. The apparatus may be the above network device, or may also be disposed in the network device. As illustrated in FIG. 11, the apparatus 1100 includes a transmitting module 1110.

The transmitting module 1110 is configured to transmit first information, where the first information is used to determine a first resource, the first resource is used to transmit a sensing signal, and the first resource is not used to transmit a communication signal.

In some embodiments, the first information includes frequency-domain information and/or time-domain information, where the frequency-domain information is used to determine a frequency-domain position of the first resource, and the time-domain information is used to determine a time-domain position of the first resource.

In some embodiments, the frequency-domain information includes first indication information, the first indication information is used to determine a first frequency-domain resource unit in a first frequency band, and the first frequency-domain resource unit is a frequency-domain resource unit in which the first resource is located.

In some embodiments, the first frequency band includes N frequency-domain resource units, the first indication information includes N bits, each of the N bits is used to indicate whether a respective one of the N frequency-domain resource units is the first frequency-domain resource unit, and N is a positive integer.

In some embodiments, the first indication information is used to determine a starting frequency-domain position of the first frequency-domain resource unit and/or the number of first frequency-domain resource units.

In some embodiments, the first indication information includes at least one of a first period, a first offset value, or a first quantity, where the first period is used to indicate the number of frequency-domain resource units included in each frequency-domain resource unit period in the first frequency band, the first offset value is used to indicate a position of a first one of first frequency-domain resource units in each frequency-domain resource unit period, and the first quantity is used to indicate the number of the first frequency-domain resource units in each frequency-domain resource unit period.

In some embodiments, the frequency-domain information includes second indication information, the second indication information is used to determine a first subcarrier in a first frequency-domain resource unit, the first frequency-domain resource unit is a frequency-domain resource unit in which the first resource is located, and the first subcarrier is a subcarrier in which the first resource is located.

In some embodiments, the first frequency-domain resource unit includes M subcarriers, the second indication information includes M bits, each of the M bits is used to indicate whether a respective one of the M subcarriers is the first subcarrier, and M is a positive integer.

In some embodiments, M is equal to the number of subcarriers included in the first frequency-domain resource unit, or, M is equal to a product of the number of subcarriers included in the first frequency-domain resource unit and the number of first frequency-domain resource units.

In some embodiments, N is determined according to the number of RBs included in the first frequency band and the number of RBs included in each of the frequency-domain resource units, and each of the frequency-domain resource units includes one RB or multiple consecutive RBs.

In some embodiments, a frequency-domain resource unit is a subcarrier.

In some embodiments, a first frequency band is a carrier or a BWP.

In some embodiments, the time-domain information included third indication information, the third indication information is used to determine a first time-domain unit in each time-domain period, and the first time-domain unit is a time-domain unit in which the first resource is located.

In some embodiments, each time-domain period includes P time-domain units, the third indication information includes P bits, each of the P bits is used to indicate whether a respective one of the P time-domain units is the first time-domain unit, and P is a positive integer.

In some embodiments, the third indication information is used to determine a starting time-domain position of the first time-domain unit in the time-domain period and/or the number of first time-domain units in the time-domain period.

In some embodiments, the third indication information includes a second period, a second offset value, or a second quantity, where the second period is used to indicate the number of time-domain units included in each time-domain period, the second offset value is used to indicate a position of a first one of first time-domain units in each time-domain period, and the second quantity is used to indicate the number of first time-domain units in each time-domain period.

In some embodiments, the time-domain information includes fourth indication information, the fourth indication information is used to determine a first time-domain subunit in a first time-domain unit, the first time-domain unit is a time-domain unit in which the first resource is located, the first time-domain subunit is a time-domain subunit in which the first resource is located, and each time-domain unit includes multiple time-domain subunits.

In some embodiments, the first time-domain unit includes Q time-domain subunits, the fourth indication information includes Q bits, each of the Q bits is used to indicate whether a respective one of the Q time-domain subunits is the first time-domain subunit, and Q is a positive integer.

In some embodiments, Q is equal to the number of time-domain subunits included in the first time-domain unit, or, Q is equal to a product of the number of time-domain subunits included in the first time-domain unit and the number of first time-domain units.

In some embodiments, a time-domain unit is a slot, and a time-domain subunit is a symbol or a symbol group.

In some embodiments, a time-domain unit is a symbol or a symbol group.

The technical solutions provided by the embodiments of the present application, during a wireless communication procedure, the first resource is determined and the first resource is not used to transmit a communication signal, so that when the communication signal and other signals coexist, the communication signal and the other signals are transmitted without using the same resource. This may effectively reduce communication interference between the communication signal and other signals, thereby improving communication efficiency. In addition, in a case where the first resource is used to transmit a sensing signal, the above method may effectively reduce communication interference between the communication signal and the sensing signal, thereby improving communication efficiency.

It should be noted that, when the apparatus provided by the above embodiments implements their functions, the division into the various functional modules as described above is merely illustrative. In practical applications, the above functions may be allocated to and completed by different functional modules as needed. That is, the internal structure of the device may be divided into different functional modules to complete all or part of the functions described above.

Regarding the apparatus in the above embodiments, the specific manner of which each module performs operations has already been described in detail in the embodiments related to the method, and will not be elaborated upon here. For details not specified in the apparatus embodiments, reference may be made to the above method embodiments.

Please refer to FIG. 12, which illustrates a schematic structural diagram of a terminal device provided by an embodiment of the present application. The terminal device 1200 may include: a processor 1201, a transceiver 1202, and a memory 1203. The transceiver 1202 is configured to implement transmitting or receiving functions, such as implementing the functions of the above receiving module 1010. The processor 1201 may be configured to implement other processing functions or control transmitting and/or receiving.

The processor 1201 includes one or more processing cores. The processor 1201 executes software programs and modules, to implement various functional applications and information processing.

The transceiver 1202 may include a receiver and a transmitter. For example, the receiver and the transmitter may be implemented as a single wireless communication component, the wireless communication component may include a wireless communication chip and a radio frequency antenna.

The memory 1203 may be connected to the processor 1201 and the transceiver 1202.

The memory 1203 may be configured to store computer programs executed by the processor. The processor 1201 is configured to execute the computer programs, to implement various steps performed by the terminal device in the above method embodiments.

In some embodiments, the transceiver 1202 is configured to receive first information, where the first information is used to determine a first resource, the first resource is used to transmit a sensing signal, and the first resource is not used to transmit a communication signal.

For details not specified in this embodiment, reference may be made to the above embodiments, which will not be repeated here.

Furthermore, the memory may be implemented by any type of a volatile storage device or a non-volatile storage device or a combination thereof, the volatile storage device or non-volatile storage device includes but is not limited to: a magnetic disk or an optical disk, an electrically erasable programmable read-only memory, an erasable programmable read-only memory, a static random-access memory, a read-only memory, a magnetic memory, a flash memory, and a programmable read-only memory

Please refer to FIG. 13, which illustrates a schematic structural diagram of a network device provided by an embodiment of the present application. The network device 1300 may include: a processor 1301, a transceiver 1302, and a memory 1303. The transceiver 1302 is configured to implement transmitting or receiving functions, such as implementing the functions of the above transmitting module 1110. The processor 1301 may be configured to implement other processing functions or control transmitting and/or receiving.

The processor 1301 includes one or more processing cores. The processor 1301 executes software programs and modules, to implement various functional applications and information processing.

The transceiver 1302 may include a receiver and a transmitter. For example, the receiver and the transmitter may be implemented as a single wireless communication component, the wireless communication component may include a wireless communication chip and a radio frequency antenna.

The memory 1303 may be connected to the processor 1301 and the transceiver 1302.

The memory 1303 may be configured to store computer programs executed by the processor. The processor 1301 is configured to execute the computer programs, to implement various steps performed by the network device in the above method embodiments.

In some embodiments, a transceiver 1302 is configured to transmit first information, where the first information is used to determine a first resource, the first resource is used to transmit a sensing signal, and the first resource is not used to transmit a communication signal.

For details not specified in this embodiment, reference may be made to the above embodiments, which will not be repeated here.

Furthermore, the memory may be implemented by any type of a volatile storage device or non-volatile storage device or a combination thereof, and the volatile storage device or non-volatile storage device includes but is not limited to: a magnetic disk or an optical disk, an electrically erasable programmable read-only memory, an erasable programmable read-only memory, a static random-access memory, a read-only memory, a magnetic memory, a flash memory, and a programmable read-only memory.

The embodiments of the present application further provide a computer-readable storage medium, the storage medium stores a computer program thereon. The computer program is configured to be executed by a processor, to implement the above wireless communication methods on the terminal device side, or to implement the above wireless communication methods on the network device side. In some embodiments, the computer-readable storage medium may include: a read-only memory (ROM), a random-access memory (RAM), solid state drives (SSD), or optical disks, or the like. The random-access memory may include a resistance random access memory (ReRAM) and a dynamic random access memory (DRAM).

The embodiments of the present application further provide a chip. The chip includes a programmable logic circuitry and/or program instructions. The chip, when executed, is configured to implement the above wireless communication methods on the terminal device side, or to implement the above wireless communication methods on the network device side.

The embodiments of the present application further provide a computer program product. The computer program product includes computer instructions. The computer instructions are stored in a computer-readable storage medium. A processor reads the computer instructions from the computer-readable storage medium and executes the computer instructions, to implement the above wireless communication methods on the terminal device side, or to implement the above wireless communication methods on the network device side.

It should be understood that, "indicate" mentioned in the embodiments of the present application may refer to a direct indication, may also refer to an indirect indication, and may further represent there is an associative relationship. For example, A indicating B may mean that A directly indicates B, e.g., B may be obtained through A; it may also mean that A indirectly indicates B, e.g., A indicates C, and B may be obtained through C; it may further mean that there is an associative relationship between A and B.

In the description of the embodiments of the present application, the term "correspond" may represent that there is a direct correspondence or indirect correspondence between the two, may also represent there is an associative relationship between the two, and may also refer to relationships such as indicating and being indicated, or configuring and being configured.

In some embodiments of the present application, the term "predefined" may be implemented by pre-storing corresponding code, table, or other manners for indicating related information in a device (e.g., including a terminal device and a network device). The specific implementation manner thereof is not limited in the present application. For example, the term "predefined" may refer to one defined in a protocol.

In some embodiments of the present application, the term "protocol" may refer to a standard protocol in the communication field, such as an LTE protocol, an NR protocol, and related protocols applied in future communication systems, which is not limited in the present application.

The term "multiple/a plurality of" mentioned herein refers to two or more. The term "and/or" describes an associative relationship between associated objects, which represents that there may be three relationships. For example, "A and/or B" may represent: A exists alone, both A and B exist, and B exists alone. The character "/" generally represents that the associated objects before and after this character are in an "or" relationship.

The term "greater than or equal to" mentioned herein may represent greater than or equal to, or greater than, and the term "less than or equal to" may represent less than or equal to, or less than.

In addition, the step numbers described herein are merely exemplary of one possible execution order among the steps. In some other embodiments, the above steps may also be executed in an order different from the numbered order, such as two differently numbered steps being executed simultaneously, or two differently numbered steps being executed in an order opposite to that illustrated, which is not limited in the embodiments of the present application.

Those skilled in the art should appreciate that, in one or more of the above examples, the functions described in the embodiments of the present application may be implemented in hardware, software, firmware, or any combination thereof. When implemented in software, these functions may be stored in a computer-readable medium or transmitted as one or more instructions or codes in the computer-readable medium. The computer-readable medium includes a computer storage medium and a communication medium, where the communication medium includes any medium that facilitates the transmission of a computer program from one place to another place. A storage medium may be any available medium that may be accessed by a general-purpose or special-purpose computer.

The above descriptions are merely exemplary embodiments of the present application and are not intended to limit the present application. Any modification, equivalent replacement, improvement made within the spirit and principles of the present application should be included within the protection scope of the present application.

## Claims

1. A wireless communication method, performed by a terminal device and comprising:
receiving first information, wherein the first information is used to determine a first resource, the first resource is used to transmit a sensing signal, and the first resource is not used to transmit a communication signal.

2. The method according to claim 1, wherein the first information comprises frequency-domain information and/or time-domain information, wherein the frequency-domain information is used to determine a frequency-domain position of the first resource, and the time-domain information is used to determine a time-domain position of the first resource.

3. The method according to claim 2, wherein the frequency-domain information comprises first indication information, the first indication information is used to determine a first frequency-domain resource unit in a first frequency band, and the first frequency-domain resource unit is a frequency-domain resource unit in which the first resource is located.

4. The method according to claim 3, wherein the first frequency band comprises N frequency-domain resource units, the first indication information comprises N bits, each of the N bits is used to indicate whether a respective one of the N frequency-domain resource units is the first frequency-domain resource unit, and N is a positive integer.

5. The method according to claim 3, wherein the first indication information is used to determine a starting frequency-domain position of the first frequency-domain resource and/or a number of first frequency-domain resource units.

6. The method according to claim 3, wherein the first indication information comprises at least one of a first period, a first offset value, or a first quantity; wherein
the first period is used to indicate a number of frequency-domain resource units comprised in each frequency-domain resource unit period in the first frequency band;
the first offset value is used to indicate a position of a first one of first frequency-domain resource units in each frequency-domain resource unit period; and
the first quantity is used to indicate a number of first frequency-domain resource units in each frequency-domain resource unit period.

7. The method according to any one of claims 2 to 6, wherein the frequency-domain information comprises second indication information, the second indication information is used to determine a first subcarrier in a first frequency-domain resource unit, the first frequency-domain resource unit is a frequency-domain resource unit in which the first resource is located, and the first subcarrier is a subcarrier in which the first resource is located.

8. The method according to claim 7, wherein the first frequency-domain resource unit comprises M subcarriers, the second indication information comprises M bits, each of the M bits is used to indicate whether a respective one of the M subcarriers is the first subcarrier, and M is a positive integer.

9. The method according to claim 8, wherein M is equal to a number of subcarriers comprised in the first frequency-domain resource unit, or, M is equal to a product of the number of subcarriers comprised in the first frequency-domain resource unit and a number of first frequency-domain resource units.

10. The method according to claim 4, wherein N is determined based on a number of resource blocks (RB) comprised in the first frequency band and a number of RBs comprised in each of the frequency-domain resource units, and each of the frequency-domain resource units comprises one RB or multiple consecutive RBs.

11. The method according to claim 3, wherein a frequency-domain resource unit is a subcarrier.

12. The method according to any one of claims 3 to 11, wherein the first frequency band is a carrier or a bandwidth part (BWP).

13. The method according to any one of claims 2 to 12, wherein the time-domain information comprises third indication information, the third indication information is used to determine a first time-domain unit in each time-domain period, and the first time-domain unit is a time-domain unit in which the first resource is located.

14. The method according to claim 13, wherein each time-domain period comprises P time-domain units, the third indication information comprises P bits, each of the P bits is used to indicate whether a respective one of the P time-domain units is the first time-domain unit, and P is a positive integer.

15. The method according to claim 13, wherein the third indication information is used to determine a starting time-domain position of the first time-domain unit in the time-domain period and/or a number of first time-domain units in the time-domain period.

16. The method according to claim 13, wherein the third indication information comprises a second period, a second offset value, or a second quantity; wherein
the second period is used to indicate a number of time-domain units comprised in each time-domain period;
the second offset value is used to indicate a position of a first one of first time-domain units in each time-domain period; and
the second quantity is used to indicate a number of first time-domain units in each time-domain period.

17. The method according to any one of claims 2, 13 to 16, wherein the time-domain information comprises fourth indication information, the fourth indication information is used to determine a first time-domain subunit in a first time-domain unit, the first time-domain unit is a time-domain unit in which the first resource is located, the first time-domain subunit is a time-domain subunit in which the first resource is located, and each time-domain unit comprises multiple time-domain subunits.

18. The method according to claim 17, wherein the first time-domain unit comprises Q time-domain subunits, the fourth indication information comprises Q bits, each of the Q bits is used to indicate whether a respective one of the Q time-domain subunits is the first time-domain subunit, and Q is a positive integer.

19. The method according to claim 18, wherein Q is equal to a number of time-domain subunits comprised in the first time-domain unit, or, Q is equal to a product of the number of time-domain subunits comprised in the first time-domain unit and a number of first time-domain units.

20. The method according to any one of claims 17 to 19, wherein a time-domain unit is a slot, and a time-domain subunit is a symbol or a symbol group.

21. The method according to claim 13, wherein a time-domain unit is a symbol or a symbol group.

22. A wireless communication method, performed by a network device and comprising:
transmitting first information, wherein the first information is used to determine a first resource, the first resource is used to transmit a sensing signal, and the first resource is not used to transmit a communication signal.

23. The method according to claim 22, wherein the first information comprises frequency-domain information and/or time-domain information, wherein the frequency-domain information is used to determine a frequency-domain position of the first resource, and the time-domain information is used to determine a time-domain position of the first resource.

24. The method according to claim 23, wherein the frequency-domain information comprises first indication information, the first indication information is used to determine a first frequency-domain resource unit in a first frequency band, and the first frequency-domain resource unit is a frequency-domain resource unit in which the first resource is located.

25. The method according to claim 24, wherein the first frequency band comprises N frequency-domain resource units, the first indication information comprises N bits, each of the N bits is used to indicate whether a respective one of the N frequency-domain resource units is the first frequency-domain resource unit, and N is a positive integer.

26. The method according to claim 24, wherein the first indication information is used to determine a starting frequency-domain position of the first frequency-domain resource unit and/or a number of first frequency-domain resource units.

27. The method according to claim 24, wherein the first indication information comprises at least one of a first period, a first offset value, or a first quantity; wherein
the first period is used to indicate a number of frequency-domain resource units comprised in each frequency-domain resource unit period in the first frequency band;
the first offset value is used to indicate a position of a first one of first frequency-domain resource units in each frequency-domain resource unit period; and
the first quantity is used to indicate a number of the first frequency-domain resource units in each frequency-domain resource unit period.

28. The method according to any one of claims 23 to 27, wherein the frequency-domain information comprises second indication information, the second indication information is used to determine a first subcarrier in a first frequency-domain resource unit, the first frequency-domain resource unit is a frequency-domain resource unit in which the first resource is located, and the first subcarrier is a subcarrier in which the first resource is located.

29. The method according to claim 28, wherein the first frequency-domain resource unit comprises M subcarriers, the second indication information comprises M bits, each of the M bits is used to indicate whether a respective one of the M subcarriers is the first subcarrier, and M is a positive integer.

30. The method according to claim 29, wherein M is equal to a number of subcarriers comprised in the first frequency-domain resource unit, or, M is equal to a product of the number of subcarriers comprised in the first frequency-domain resource unit and a number of first frequency-domain resource units.

31. The method according to claim 25, wherein N is determined according to a number of resource blocks (RBs) comprised in the first frequency band and a number of RBs comprised in each of the frequency-domain resource units, and each of the frequency-domain resource units comprises one RB or multiple consecutive RBs.

32. The method according to claim 24, wherein a frequency-domain resource unit is a subcarrier.

33. The method according to any one of claims 24 to 32, wherein the first frequency band is a carrier or a bandwidth part (BWP).

34. The method according to any one of claims 23 to 33, wherein the time-domain information comprises third indication information, the third indication information is used to determine a first time-domain unit in each time-domain period, and the first time-domain unit is a time-domain unit in which the first resource is located.

35. The method according to claim 34, wherein each time-domain period comprises P time-domain units, the third indication information comprises P bits, each of the P bits is used to indicate whether a respective one of the P time-domain units is the first time-domain unit, and P is a positive integer.

36. The method according to claim 34, wherein the third indication information is used to determine a starting time-domain position of the first time-domain unit in the time-domain period and/or a number of first time-domain units in the time-domain period.

37. The method according to claim 34, wherein the third indication information comprises a second period, a second offset value, or a second quantity; wherein
the second period is used to indicate a number of time-domain units comprised in each time-domain period;
the second offset value is used to indicate a position of a first one of first time-domain units in each time-domain period; and
the second quantity is used to indicate a number of first time-domain units in each time-domain period.

38. The method according to any one of claims 23, 34 to 37, wherein the time-domain information comprises fourth indication information, the fourth indication information is used to determine a first time-domain subunit in a first time-domain unit, the first time-domain unit is a time-domain unit in which the first resource is located, the first time-domain subunit is a time-domain subunit in which the first resource is located, and each time-domain unit comprises multiple time-domain subunits.

39. The method according to claim 38, wherein the first time-domain unit comprises Q time-domain subunits, the fourth indication information comprises Q bits, each of the Q bits is used to indicate whether a respective one of the Q time-domain subunits is the first time-domain subunit, and Q is a positive integer.

40. The method according to claim 39, wherein Q is equal to a number of time-domain subunits comprised in the first time-domain unit, or Q is equal to a product of the number of time-domain subunits comprised in the first time-domain unit and a number of first time-domain units.

41. The method according to any one of claims 38 to 40, wherein a time-domain unit is a slot, and a time-domain subunit is a symbol or a symbol group.

42. The method according to claim 34, wherein a time-domain unit is a symbol or a symbol group.

43. A wireless communication apparatus, comprising:
a receiving module, configured to receive first information, wherein the first information is used to determine a first resource, the first resource is used to transmit a sensing signal, and the first resource is not used to transmit a communication signal.

44. A wireless communication apparatus, comprising:
a transmitting module, configured to transmit first information, wherein the first information is used to determine a first resource, the first resource is used to transmit a sensing signal, and the first resource is not used to transmit a communication signal.

45. A communication device, comprising a processor and a memory, wherein the memory stores a computer program thereon, and the processor executes the computer program to implement the method according to any one of claims 1 to 21, or to implement the method according to any one of claims 22 to 42.

46. A computer-readable storage medium, wherein the storage medium stores a computer program thereon, and the computer program is configured to be executed by a processor to implement the method according to any one of claims 1 to 21, or to implement the method according to any one of claims 22 to 42.

47. A chip, comprising a programmable logic circuitry and/or program instructions, wherein the chip, when in operation, is configured to implement the method according to any one of claims 1 to 21, or implement the method according to any one of claims 22 to 42.

48. A computer program product, comprising computer instructions, wherein the computer instructions are stored in a computer-readable storage medium, and a processor reads the computer instructions from the computer-readable storage medium and executes the computer instructions, to implement the method according to any one of claims 1 to 21, or to implement the method according to any one of claims 22 to 42.
